# EUROPEAN PATENT APPLICATION

(11) **EP 4 502 399 A1**
(43) Date of publication of application: **05.02.2025**
(21) Application number: 23781012.2
(22) Date of filing: 30.03.2023
(51) Int. Cl.: F15D 1/12

(54) **STRUCTURE AND OBJECT COMPRISING STRUCTURE**

(30) Priority: 30.03.2022 JP 2022057009; 30.03.2022 JP 2022057101; 09.12.2022 JP 2022197385; 09.12.2022 JP 2022197387
(71) Applicant: Dai Nippon Printing Co., Ltd., Tokyo 162-8001 (JP)
(72) Inventor: MAEDA Yoko, Tokyo 162-8001 (JP); CHIBA Tsuyoshi, Tokyo 162-8001 (JP); HASHIMOTO Kazuya, Tokyo 162-8001 (JP); ARAKAWA Fumihiro, Tokyo 162-8001 (JP); MOCHIZUKI Shinsuke, Ube-shi, Yamaguchi 755-8611 (JP)
(74) Representative: Beck Greener LLP
(86) International application number: PCT/JP2023/013421
(87) International publication number: WO 2023/191004

(57) **Abstract**

A structured body for reducing resistance of a fluid includes a first face that comes into contact with the fluid, a frictional portion that is situated on the first face and that spreads in a planar first direction along the first face, and a first smooth portion that is situated on the first face and that is adjacent to the frictional portion in a planar second direction that intersects the planar first direction. The frictional portion includes a plurality of first guide structures that are arrayed in the planar first direction and that guide the fluid to the first smooth portion. The first guide structures each include a first end portion that extends toward the first smooth portion. The first end portion has a first inclination angle that is greater than 0° and smaller than 90° with respect to the planar first direction.

## Description

### Technical Field

An embodiment of the present disclosure relates to a structured body for reducing resistance of a fluid, and an object that includes the structured body.

### Background Art

In a case of a fluid flowing along an object, a boundary layer is formed between a surface of the object and the fluid. At the boundary layer, the fluid receives frictional force, due to viscosity, from the surface of the object. When the frictional force becomes great, the fluid may become separated from the surface of the object, thereby forming a dead water region between the fluid and the surface of the object. This is a phenomenon called separation. When separation occurs, pressure resistance that the object receives from the fluid increases.

Installing members that generate vortices, on the surface of the object, in order to promote mixture of the fluid, is known as a method for suppressing separation from occurring. For example, PTL 1 proposes installing a structured body that includes a rough face having recesses and protrusions that are uniformly distributed, on a surface of an object.

### Citation List

### Patent Literature

PTL 1: Japanese Unexamined Patent Application Publication No. 2013-57390

### Summary of Invention

An object of an embodiment of the present disclosure is to provide a structured body that can reduce pressure resistance that an object receives from a fluid.

An embodiment of the present disclosure relates to the following [1] to [20].
[1] A structured body for reducing resistance of a fluid, the structured body including
   a first face that comes into contact with the fluid;
   a frictional portion that is situated on the first face and that spreads in a planar first direction along the first face; and
   a first smooth portion that is situated on the first face and that is adjacent to the frictional portion in a planar second direction that intersects the planar first direction, in which
   the frictional portion includes a plurality of first guide structures that are arrayed in the planar first direction and that guide the fluid to the first smooth portion,
   the first guide structures each include a first end portion that extends toward the first smooth portion, and
   the first end portion has a first inclination angle that is greater than 0° and smaller than 90° with respect to the planar first direction.
[2] The structured body according to [1] may further include a second smooth portion that is situated on the first face and that is adjacent to the frictional portion in the planar second direction. The frictional portion may be situated between the first smooth portion and the second smooth portion in the planar second direction. The frictional portion may include a plurality of second guide structures that are arrayed in the planar first direction and that guide the fluid to the second smooth portion, the second guide structures may each include a second end portion that extends toward the second smooth portion, and the second end portion may have a second inclination angle that is greater than 0° and smaller than 90° with respect to the planar first direction.
[3] The structured body according to [2], in which the frictional portion may include connecting portions that connect the first guide structures and the second guide structures.
[4] The structured body according to any one of [1] to [3], in which the frictional portion may have a length in the planar first direction of 5 mm or more and 1000 mm or less.
[5] The structured body according to any one of [1] to [4], in which the frictional portion may have a width in a direction orthogonal to the planar first direction of 0.2 mm or more and 50 mm or less.
[6] The structured body according to any one of [1] to [5], in which the first face may include a base face, and the first guide structures may protrude with respect to the base face, in a thickness direction of the structured body.
[7] The structured body according to [6], in which the first guide structures may have a first height from the base face, and the first height may be 20 µm or more and 1.0 mm or less.
[8] The structured body according to [7], in which a ratio of a gap of the plurality of first guide structures in a direction orthogonal to a direction in which the first guide structures extend, with respect to the first height, may be 1.0 or more and 12.0 or less.
[9] The structured body according to any one of [1] to [5], in which the first face may include a base face, and the first guide structures may be recessed with respect to the base face, in a thickness direction of the structured body.
[10] The structured body according to any one of [6] to [9], in which the frictional portion may include the base face at a first base proportion, and the first smooth portion may include the base face at a second base proportion that is higher than the first base proportion.
[11] The structured body according to any one of [1] to [10], in which the first inclination angle may be 15° or more and 75° or less.
[12] The structured body according to any one of [1] to [11], in which the first guide structures may linearly extend toward the first smooth portion.
[13] The structured body according to [12], in which the first guide structures may each have a deviance distance of 0.1 mm or less. The deviance distance is a greatest value of distance in the planar first direction between a first imaginary straight line and the first guide structure. The first imaginary straight line is a straight line that passes through an upstream-most portion of the first guide structure in the planar first direction and a downstream-most portion of the first guide structure in the planar first direction.
[14] The structured body according to any one of [1] to [13], in which the first face may include a curved face, and the frictional portion and the first smooth portion may be situated at the curved face.
[15] The structured body according to [14], in which a boundary line between the frictional portion and the first smooth portion may extend in parallel to the planar first direction.
[16] An object that comes into contact with a fluid, including the structured body according to any one of [1] to [15] that is situated on a surface of the object.
[17] The object according to [16] may further include a curved portion, in which the structured body may be situated at the curved portion.
[18] An object that comes into contact with a fluid, including a component that is made up of the structured body according to any one of [1] to [15].
[19] The object according to any one of [16] to [18], in which the object may be a moving body or part of a moving body.
[20] The object according to any one of [16] to [18], in which the object may control flow of the fluid.

According to an embodiment of the present disclosure, pressure resistance that an object receives from a fluid can be reduced.

### Brief Description of Drawings

[Fig. 1] Fig. 1 is a side view illustrating a first embodiment of an object.
[Fig. 2] Fig. 2 is a plan view illustrating the first embodiment of the object.
[Fig. 3] Fig. 3 is a diagram illustrating an example of a structured body attached to the object.
[Fig. 4] Fig. 4 is a plan view illustrating an example of the structured body.
[Fig. 5A] Fig. 5A is a plan view illustrating the structured body in Fig. 4 in an enlarged manner.
[Fig. 5B] Fig. 5B is a plan view illustrating a modification of the structured body.
[Fig. 6A] Fig. 6A is a cross-sectional view illustrating the structured body in Fig. 4 as viewed from a VI-VI direction.
[Fig. 6B] Fig. 6B is a cross-sectional view illustrating a modification of the structured body.
[Fig. 6C] Fig. 6C is a cross-sectional view illustrating an example of the structured body in a state prior to being attached to the object.
[Fig. 7] Fig. 7 is a diagram illustrating an example of vortices generated at the structured body.
[Fig. 8] Fig. 8 is a diagram illustrating an example of how a fluid flows over a surface of the object according to the first embodiment.
[Fig. 9] Fig. 9 is a diagram illustrating an example of how a fluid flows over a surface of an object according to a comparative form.
[Fig. 10] Fig. 10 is a cross-sectional view illustrating a modification of the structured body.
[Fig. 11A] Fig. 11A is a plan view illustrating a modification of disturbance structures.
[Fig. 11B] Fig. 11B is a plan view illustrating a modification of the disturbance structures.
[Fig. 12] Fig. 12 is a plan view illustrating a modification of the disturbance structures.
[Fig. 13] Fig. 13 is a plan view illustrating a modification of the disturbance structures.
[Fig. 14A] Fig. 14A is a plan view illustrating a modification of the disturbance structures.
[Fig. 14B] Fig. 14B is a plan view illustrating a modification of the disturbance structures.
[Fig. 15A] Fig. 15A is a plan view illustrating a modification of the disturbance structures.
[Fig. 15B] Fig. 15B is a plan view illustrating a modification of the disturbance structures.
[Fig. 16] Fig. 16 is a plan view illustrating a modification of the disturbance structures.
[Fig. 17] Fig. 17 is a plan view illustrating a modification of the structured body.
[Fig. 18] Fig. 18 is a side view illustrating a modification of the object.
[Fig. 19] Fig. 19 is a side view illustrating a modification of the object.
[Fig. 20] Fig. 20 is a table showing evaluation results of Examples A1 to A5 and Comparative Examples A1 to A2.
[Fig. 21] Fig. 21 is a table showing evaluation results of Examples A11 to A15 and Comparative Example A11.
[Fig. 22] Fig. 22 is a graph showing evaluation results of Examples A11 to A13 and Comparative Example A11.
[Fig. 23] Fig. 23 is a graph showing evaluation results of Examples A14 to A16 and Comparative Example A11.
[Fig. 24] Fig. 24 is a table showing evaluation results of Examples A21 to A28.
[Fig. 25] Fig. 25 is a graph showing evaluation results of Examples A21 to A26 and Comparative Example A11.
[Fig. 26] Fig. 26 is a graph showing evaluation results of Examples A27 to A28 and Comparative Example A11.
[Fig. 27] Fig. 27 is a side view illustrating a second embodiment of an object.
[Fig. 28] Fig. 28 is a plan view illustrating the second embodiment of the object.
[Fig. 29] Fig. 29 is a perspective view illustrating an example of a structured body attached to the object. [Fig. 30] Fig. 30 is a diagram illustrating the structured body in Fig. 29 in an enlarged manner.
[Fig. 31] Fig. 31 is a plan view illustrating an example of the structured body.
[Fig. 32A] Fig. 32A is a cross-sectional view illustrating the structured body in Fig. 31 in a case of viewing from a XXXII-XXXII direction.
[Fig. 32B] Fig. 32B is a cross-sectional view illustrating a modification of the structured body.
[Fig. 32C] Fig. 32C is a diagram for describing an example of an MD direction of the structured body.
[Fig. 32D] Fig. 32D is a diagram for describing a method of measuring positions and forms of components of frictional portions.
[Fig. 33] Fig. 33 is a diagram illustrating an example of vortices generated at the structured body.
[Fig. 34] Fig. 34 is a diagram illustrating an example of how a fluid flows over a surface of the object according to the second embodiment.
[Fig. 35] Fig. 35 is a diagram illustrating an example of how a fluid flows over a surface of an object according to a comparative form.
[Fig. 36] Fig. 36 is a cross-sectional view illustrating a modification of the structured body.
[Fig. 37A] Fig. 37A is a plan view illustrating a modification of the structured body.
[Fig. 37B] Fig. 37B is a plan view illustrating a modification of the structured body.
[Fig. 38A] Fig. 38A is a plan view illustrating a modification of the structured body.
[Fig. 38B] Fig. 38B is a diagram for describing a method of measuring a first arithmetic mean height and a first maximal height of frictional portions.
[Fig. 38C] Fig. 38C is a diagram for describing a method of measuring the first arithmetic mean height and the first maximal height of the frictional portions.
[Fig. 39] Fig. 39 is a plan view illustrating a modification of the structured body.
[Fig. 40A] Fig. 40A is a plan view illustrating a modification of the structured body.
[Fig. 40B] Fig. 40B is a diagram illustrating an example of vortices generated at the structured body in Fig. 40A.
[Fig. 41A] Fig. 41A is a plan view illustrating a modification of the structured body.
[Fig. 41B] Fig. 41B is a diagram illustrating an example of vortices generated at the structured body in Fig. 41A.
[Fig. 42] Fig. 42 is a plan view illustrating a modification of the structured body.
[Fig. 43] Fig. 43 is a plan view illustrating a modification of the structured body.
[Fig. 44] Fig. 44 is a plan view illustrating a modification of the object.
[Fig. 45] Fig. 45 is a side view illustrating a modification of the object.
[Fig. 46] Fig. 46 is a side view illustrating a modification of the object.
[Fig. 47] Fig. 47 is a side view illustrating a modification of the object.
[Fig. 48] Fig. 48 is a perspective view illustrating a modification of the object.
[Fig. 49] Fig. 49 is a perspective view illustrating a modification of the object.
[Fig. 50] Fig. 50 is a table showing evaluation results of Examples B1 to B3 and Comparative Example B1.
[Fig. 51] Fig. 51 is a graph showing evaluation results of Examples B1 to B3 and Comparative Example B1.
[Fig. 52] Fig. 52 is a table showing evaluation results of Examples B11 to B16 and Comparative Examples B11 to B12.
[Fig. 53] Fig. 53 is a graph showing evaluation results of Examples B11 to B16 and Comparative Examples B11 to B12.
[Fig. 54] Fig. 54 is a table showing evaluation results of Examples B21 to B23.
[Fig. 55] Fig. 55 is a graph showing evaluation results of Examples B21 to B23.
[Fig. 56] Fig. 56 is a table showing evaluation results of Example B31 and Comparative Examples B31 to B32.
[Fig. 57] Fig. 57 is a graph showing evaluation results of Example B31 and Comparative Examples B31 to B32.
[Fig. 58] Fig. 58 is a table showing evaluation results of Examples B41 to B51.
[Fig. 59] Fig. 59 is a graph showing evaluation results of Examples B41 to B45 and Example B51.
[Fig. 60] Fig. 60 is a table showing evaluation results of Examples B46 to B48 and Example B51.
[Fig. 61] Fig. 61 is a graph showing evaluation results of Example B41 and Examples B49 to B51.

### Description of Embodiments

A configuration of a structured body 20 and an object 10 including the structured body 20, according to embodiments of the present disclosure, will be described below in detail with reference to the drawings. Note that the first embodiment described below is an example of an embodiment of the present disclosure, and the present disclosure should not be interpreted limited to these embodiments. Terms that are used in the present specification to identify forms or geometrical conditions, and degrees thereof, such as for example, the terms "parallel", "orthogonal", and so forth, and lengths, angles, and so forth, are to be interpreted including ranges of an extent whereby similar functions can be expected, and not bound to strict meanings thereof.

In the present specification, in a case in which a plurality of candidates of an upper limit value and a plurality of candidates of a lower limit value are listed regarding a certain parameter, a numerical value range of that parameter may be made up by combining any one candidate of the upper limit value and any one candidate of the lower limit value. For example, an example will be considered regarding a case where a description, "Parameter B is, for example, A1 or more, may be A2 or more, and may be A3 or more. Parameter B is, for example, A4 or less, may be A5 or less, and may be A6 or less." is made. In this case, numerical value range of parameter B may be A1 or more and A4 or less, may be A1 or more and A5 or less, may be A1 or more and A6 or less, may be A2 or more and A4 or less, may be A2 or more and A5 or less, may be A2 or more and A6 or less, may be A3 or more and A4 or less, may be A3 or more and A5 or less, and may be A3 or more and A6 or less.

In the drawings referenced in the present disclosure, portions that are the same or portions that have similar functions are denoted by signs that are the same or signs that are similar, and repetitive description thereof may be omitted in some cases. Also, there are cases in which dimensional ratios in the drawings differ from actual ratios for the sake of expedience, and cases where parts of configurations are omitted from the drawings.

A first embodiment of the present disclosure will be described in detail with reference to the drawings. The first embodiment described below is one example of an embodiment of the present disclosure, and the present disclosure should not be interpreted limited to these embodiments alone.

The first embodiment relates to a structured body that comes into contact with a fluid. A structured body that includes a rough face is advantageous in that pressure resistance that the object receives from the fluid is reduced, but also may be disadvantageous in that frictional resistance that the fluid receives from the structured body increases.

The first embodiment has been made taking such points into consideration. It is an object of the first embodiment to provide a structured body that can reduce pressure resistance that an object receives from a fluid, while also reducing frictional resistance that the fluid receives from the structured body.

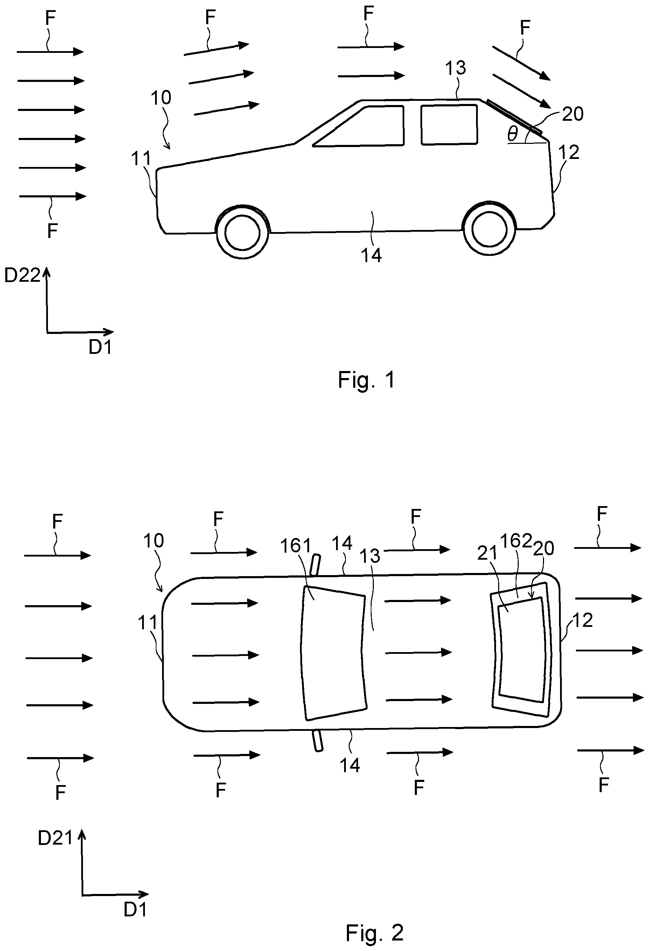

Fig. 1 is a side view illustrating an example of the object 10. Fig. 2 is a plan view illustrating an example of the object 10. The object 10 may be a moving body, such as a bus or the like, as illustrated I Fig. 1 and Fig. 2.

The object 10 may include a front face 11 and a rear face 12. The front face 11 is a face of the object 10 situated on an upstream side in a direction of flow of a fluid F. The fluid F collides with the front face 11. The rear face 12 is a face of the object 10 situated on a downstream side in the direction of flow of the fluid F. The rear face 12 is situated on the opposite side from the front face 11 in the direction of flow of the fluid F.

The direction of flow of the fluid F is a direction of movement of the fluid F relative to the object 10. In the example illustrated in Fig. 1 and Fig. 2, a situation is assumed in which the object 10 is moving forward. The direction of flow of the fluid F will also be referred to as first direction, and is denoted by sign D1. Signs D2 and D3 represent a second direction and a third direction, respectively. The second direction D2 and the third direction D3 are each orthogonal to the first direction D1. Also, the second direction D2 and the third direction D3 are orthogonal to each other. In the example illustrated in Fig. 1 and Fig. 2, the second direction D2 is a direction that is orthogonal to the first direction D1 and also follows a horizontal plane, and the third direction D3 is a direction that is orthogonal to the first direction D1 and also follows a vertical plane.

The object 10 includes side faces 14 that spread from the front face 11 to the rear face 12. The fluid F flows downstream along the side faces 14. A side face that makes up an upper end of the object 10 is also referred to as an upper face 13 in particular.

As illustrated in Fig. 1 and Fig. 2, the object 10 includes the structured body 20 that is attached to the rear face 12. The structured body 20 may be attached to an inclined portion of the rear face 12. An inclination angle θ of the inclined portion of the rear face 12 is, for example, 30° or more, may be 40° or more, and may be 50° or more. The inclination angle θ is, for example, 80° or less, may be 70° or less, and may be 60° or less. The inclination angle θ is an angle formed between a direction in which the inclined portion of the rear face 12 spreads and the first direction D1.

The structured body 20 is configured to generate vortices to promote mixing of the fluid. Attaching the structured body 20 to the object 10 can suppress separation of the fluid F from the object 10.

As illustrated in Fig. 2, the object 10 includes a front window 161 and a rear window 162. The structured body 20 may be attached to the rear window 162.

The structured body 20 includes a first face 21 that comes into contact with the fluid F. The first face 21 may include a flat region. The first face 21 may include a curved region.

In the present embodiment, the structured body 20 has flexibility. Accordingly, the structured body 20 that is attached to the object 10 is deformed in accordance with the form of the object 10. In a case in which the structured body 20 is attached to a curved portion of the object 10, a curved face can also be generated in the first face 21 of the structured body 20, for example.

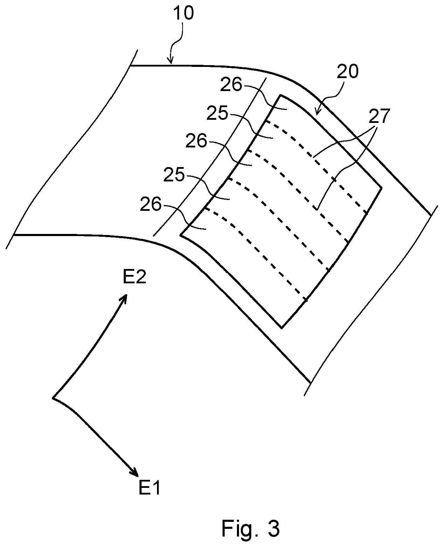

Fig. 3 is a perspective view illustrating an example of the structured body 20 that is attached to the object 10. The structured body 20 extends along a planar first direction E1 that is one of planar directions of the surface of the object 10. The planar first direction E1 may be parallel to a direction in which the first direction D1 is projected on the surface of the object 10.

As illustrated in Fig. 3, the structured body 20 includes frictional portions 25 and smooth portions 26, which are situated on the first face 21. The frictional portions 25 and the smooth portions 26 extend in the planar first direction E1. The smooth portions 26 are adjacent to the frictional portions 25 in a planar second direction E2. The planar second direction E2 is a direction along the first face 21, and is a direction intersecting the planar first direction E1. The planar second direction E2 may be orthogonal to the planar first direction E1. As illustrated in Fig. 3, a plurality of the frictional portions 25 and smooth portions 26 may be arrayed so as to alternate along the planar second direction E2.

Dotted lines in Fig. 3 that are denoted by sign 27 indicate boundaries between the frictional portions 25 and the smooth portions 26. Imaginary lines that indicate boundaries will also be referred to as boundary lines. The boundary lines 27 extend in parallel to the planar first direction E1.

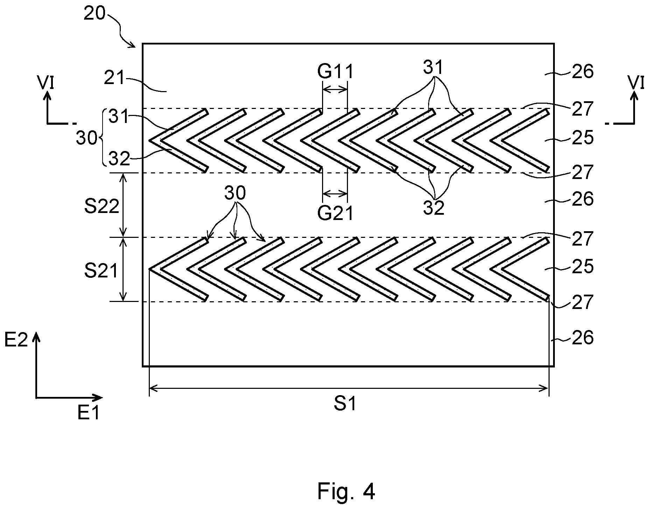

Fig. 4 is a plan view illustrating the structured body 20 on the basis of a coordinate system of the planar first direction E1 and the planar second direction E2. The frictional portions 25 are configured to disturb the flow of the fluid F. For example, resistance that the fluid F receives when the fluid F flows along the frictional portions 25 is greater than resistance that the fluid F receives when the fluid F flows along the smooth portions 26. As a result, a flow that is diverted from the first direction D1 can be generated at the boundaries between the frictional portions 25 and the smooth portions 26. For example, vortices can be generated in the fluid F at the boundaries between the frictional portions 25 and the smooth portions 26.

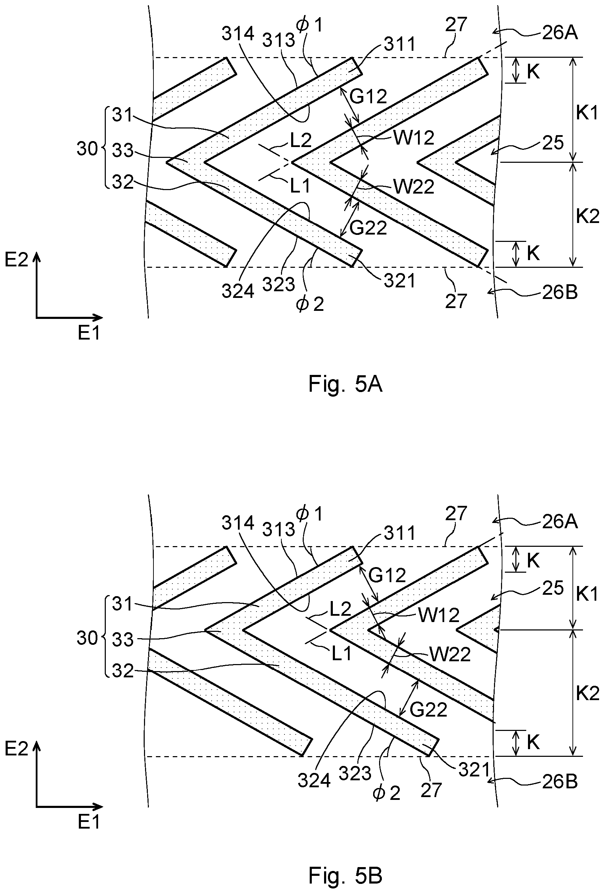

As illustrated in Fig. 4, the frictional portions 25 may include a plurality of disturbance structures 30 that disturb the flow of the fluid F. The plurality of disturbance structures 30 may be arrayed in the planar first direction E1. As illustrated in Fig. 5A, the disturbance structures 30 include end portions that come into contact with the smooth portions 26. The boundary lines 27 are defined as lines passing through the end portions of the plurality of disturbance structures 30.

In Fig. 4, sign S1 denotes a dimension of the frictional portions 25 in the planar first direction E1. The dimensions S1 will also be referred to as length S1. The length S1 may be set such that a sufficient number of disturbance structures 30 are arrayed in the planar first direction E1. The length S1 is, for example, 5 mm or more, may be 10 mm or more, may be 25 mm or more, may be 30 mm or more, may be 50 mm or more, and may be 100 mm or more. Accordingly, the fluid F flowing along the frictional portions 25 can be repeatedly disturbed by the plurality of disturbance structures 30. Accordingly, mixing of the fluid at a boundary layer between the fluid F and the surface of the object 10 can be promoted. Thus, separation of the fluid can be suppressed.

On the other hand, when the length S1 is excessively great, the frictional resistance that the fluid F receives from the structured body 20 increases, and flow of the fluid F is impeded. Giving consideration to this point, the length S1 is, for example, 1000 mm or less, may be 500 mm or less, and may be 200 mm or less.

As illustrated in Fig. 5A, the length S1 of the frictional portions 25 is set on the basis of the disturbance structure 30 that is situated farthest upstream in the direction of flow of the fluid F, and the disturbance structure 30 that is situated farthest downstream.

The length of the smooth portions 26 in the planar first direction E1 may be the same as the length S1 of the frictional portions 25, or may be different. The numerical value range of the length of the smooth portions 26 may be the same as the above-described numerical value range of the length S1, or may be different.

In Fig. 4, sign S21 denotes the dimension of the frictional portions 25 in the planar second direction E2. The dimension S21 will also be referred to as width S21. The width S21 may be set such that the flow of the fluid F can be sufficiently disturbed by the frictional portion 25. The width S21 may be, for example, 0.2 mm or more, may be 1.0 mm or more, and may be 5.0 mm or more.

On the other hand, when the width S21 is excessively great, the ratio of the magnitude of vortices generated at the boundary between the frictional portions 25 and the smooth portions 26, as to the width S21, becomes small. As a result, the proportion of the fluid F that is less readily affected by the vortices increases. Taking this point into consideration, the width S21 is, for example, 50 mm or less, may be 30 mm or less, and may be 25 mm or less.

The width S21 of the frictional portions 25 may be greater than the length S1 of the frictional portions 25, although this is not illustrated. In other words, the length S1 of the frictional portions 25 may be smaller than the width S21 of the frictional portions 25. In a case in which the structured body 20 has a form of being applied to the object 10, efficiency of work for application thereof can be improved by reducing the length S1 of the frictional portion 25.

A width S22 of the smooth portions 26 in the planar second direction E2 may be the same as the width S21 of the frictional portions 25, or may be different from the width S21. The numerical value range of the width S22 of the smooth portions 26 may be the same as the above-described numerical value range of the width S21 of the frictional portions 25, or may be different.

As described above, one reason that vortices are generated at the boundaries between the frictional portions 25 and the smooth portions 26 is the difference between the resistance that the fluid F receives at the frictional portions 25 and the resistance that the fluid F receives at the smooth portions 26. The greater the width S22 of the smooth portions 26 is, the more the flow of the fluid F is promoted at the smooth portions 26, and the resistance that the fluid F receives at the smooth portions 26 decreases. The smaller the resistance at the smooth portions 26 is, the greater the difference between the resistance at the frictional portions 25 and the resistance at the smooth portions 26 is, and generation of vortices is promoted. The width S22 of the smooth portions 26 preferably has a ratio of a certain level or more with respect to the width S21 of the frictional portions 25. S22/S21, which is the ratio of the width S22 of the smooth portions 26 as to the width S21 of the frictional portions 25 is, for example, 0.20 or more, may be 0.50 or more, and may be 1.00 or more. S22/S21 is, for example, 3.00 or less, may be 2.50 or less, and may be 2.00 or less. The width S22 of the smooth portions 26 is, for example, 0.2 mm or more, may be 1.2 mm or more, may be 2.0 mm or more, and may be 5.0 mm or more. The width S22 of the smooth portions 26 is, for example, 50 mm or less, may be 30 mm or less, may be 25 mm or less, and may be 20 mm or less.

As illustrated in Fig. 4, the disturbance structures 30 include first guide structures 31 and second guide structures 32. Fig. 5A is a plan view illustrating the disturbance structures 30 in an enlarged manner. The first guide structures 31 and the second guide structures 32 are arrayed in the planar second direction E2. The disturbance structures 30 may include connecting portions 33 that connect the first guide structures 31 and the second guide structures 32.

As illustrated in Fig. 5A, two smooth portions 26 that are adjacent to a frictional portion 25 are also referred to as a first smooth portion 26A and a second smooth portion 26B. The frictional portion 25 is situated between the first smooth portion 26A and the second smooth portion 26B in the planar second direction E2. The first guide structures 31 are configured to guide the fluid F to the first smooth portion 26A. Thus, generation of vortices at the boundary between the frictional portion 25 and the first smooth portion 26A can be promoted. The second guide structures 32 are configured to guide the fluid F to the second smooth portion 26B. Thus, generation of vortices at the boundary between the frictional portion 25 and the second smooth portion 26B can be promoted.

The configuration of the first guide structures 31 will be described. As illustrated in Fig. 5A, the first guide structures 31 include first end portions 311 that are adjacent to the first smooth portion 26A. The first end portions 311 are portions that are adjacent to the first smooth portion 26A and that have a dimension K in the planar second direction E2. The dimension K has a magnitude of 10% of the width S21 described above.

The first end portions 311 extend toward the first smooth portion 26A along a direction inclined as to the planar first direction E1. An angle that the first end portions 311 form with respect to the planar first direction E1 will also be referred to as a first inclination angle, as is denoted by sign φ1. The first inclination angle φ1 is smaller than 90°. Accordingly, the first guide structures 31 can impart the fluid F that has collided with the first guide structures 31 with a velocity component heading toward the first smooth portion 26A.

The first inclination angle φ1 is, for example, more than 0°, may be 15° or more, and may be 30° or more. The first inclination angle φ1 is, for example, less than 90°, may be 75° or less, and may be 60° or less. In a case in which the first inclination angle φ1 is 15° or more and 75° or less, the force of the fluid F heading toward the first smooth portion 26A can be made to be approximately 25% or more of the total force of the fluid F. In a case in which the first inclination angle φ1 is 30° or more and 60° or less, the force of the fluid F heading toward the first smooth portion 26A can be made to be approximately 50% or more of the total force of the fluid F. The force of the fluid F heading toward the first smooth portion 26A is proportionate to the product of sinφ1 and cosφ1.

As illustrated in Fig. 5A, the first guide structures 31 include first upstream faces 313 and first downstream faces 314. The first upstream faces 313 are side faces of the first guide structures 31 that are situated on the upstream side in the planar first direction E1. The first downstream faces 314 are side faces of the first guide structures 31 that are situated on the downstream side in the planar first direction E1. The first inclination angle φ1 is an angle that lines of intersection of the first upstream faces 313 of the first end portions 311 and a base face 21B that will be described later forms with respect to the planar first direction E1.

As illustrated in Fig. 5A, the first guide structures 31 may linearly extend toward the first smooth portion 26A. For example, end portions of the first upstream faces 313 of the first guide structures 31 in plan view may extend toward the first smooth portion 26A at the first inclination angle φ1. Thus, the fluid F that has collided with the first guide structures 31 can be efficiently guided to the first smooth portion 26A. Sign K1 denotes a dimension in the planar second direction E2 of portions of the first guide structures 31 linearly extending toward the first smooth portion 26A. K1/S21, which is the ratio of the dimension K1 with respect to the above-described width S21 is, for example, 0.20 or more, may be 0.30 or more, and may be 0.40 or more.

An entirety of the first guide structures 31 may linearly extend from the connecting portions 33 toward the first smooth portion 26A. The first guide structures 31 may each have a deviance distance of 0.1 mm or less, for example. The deviance distance is the greatest value of distance between a first imaginary straight line L1 and the first guide structure 31 in the planar first direction E1. The first imaginary straight line L1 is a straight line that passes through an upstream-most portion of the first upstream face 313 of the first guide structure 31 in the planar first direction E1 and a downstream-most portion of the first upstream face 313 of the first guide structure 31 in the planar first direction E1. In a case in which the entirety of the first guide structures 31 extends linearly from the connecting portions 33 toward the first smooth portion 26A, the deviance distance is 0 mm.

The configuration of the second guide structures 32 will be described. As illustrated in Fig. 5A, the second guide structures 32 include second end portions 321 that are adjacent to the second smooth portion 26B. The second end portions 321 are portions of the second guide structures 32 that are adjacent to the second smooth portion 26B and that have the dimension K in the planar second direction E2.

The second end portions 321 extend toward the second smooth portion 26B along a direction inclined as to the planar first direction E1. An angle that the second end portions 321 form with respect to the planar first direction E1 will be referred to as a second inclination angle, as is denoted by sign φ2. The second inclination angle φ2 is smaller than 90°. Accordingly, the second guide structures 32 can impart the fluid F that has collided with the second guide structures 32 with a velocity component heading toward the second smooth portion 26B. The second inclination angle φ2 may be the same as the first inclination angle φ1, or may be different. The numerical value range of the first inclination angle φ1 described above can be employed as the numerical value range for the second inclination angle φ2.

As illustrated in Fig. 5A, the second guide structures 32 include second upstream faces 323 and second downstream faces 324. The second upstream faces 323 are side faces of the second guide structures 32 that are situated on the upstream side in the planar first direction E1. The second downstream faces 324 are side faces of the second guide structures 32 that are situated on the downstream side in the planar first direction E1. The second inclination angle φ2 is an angle that lines of intersection of the second upstream faces 323 of the second end portions 321 and the base face 21B that will be described later form with respect to the planar first direction E1.

In the same way as with the first guide structures 31, the second guide structures 32 may linearly extend toward the second smooth portion 26B. For example, end portions of the second upstream faces 323 of the second guide structures 32 in plan view may extend toward the second smooth portion 26B at the second inclination angle φ2. Thus, the fluid F that has collided with the second guide structures 32 can be efficiently guided to the second smooth portion 26B. Sign K2 denotes a dimension in the planar second direction E2 of portions of the second guide structures 32 linearly extending toward the second smooth portion 26B. K2/S21, which is the ratio of the dimension K2 with respect to the above-described width S21 is, for example, 0.20 or more, may be 0.30 or more, and may be 0.40 or more.

In the same way as with the first guide structures 31, the entirety of the second guide structures 32 may linearly extend from the connecting portions 33 toward the second smooth portion 26B. The second guide structures 32 may each have a deviance distance of 0.1 mm or less, for example. The deviance distance is the greatest value of distance between a second imaginary straight line L2 and the second guide structure 32 in the planar first direction E1. The second imaginary straight line L2 is a straight line that passes through an upstream-most portion of the second upstream face 323 of the second guide structure 32 in the planar first direction E1 and a downstream-most portion of the second upstream face 323 of the second guide structure 32 in the planar first direction E1. In a case in which the entirety of the second guide structures 32 extends linearly from the connecting portions 33 toward the second smooth portion 26B, the deviance distance is 0 mm.

The connecting portions 33 are situated between the first guide structures 31 and the second guide structures 32 in the planar second direction E2. The positions of the connecting portions 33 in the planar second direction E2 are determined by the dimension K1 of the first guide structures 31 and the dimension K2 of the second guide structures 32. For example, in a case in which the connecting portions 33 are situated at the approximate middle of the frictional portion 25 in the planar second direction E2, as illustrated in Fig. 5A, K1/S21 and K2/S21 are, for example, 0.40 or more, and may be 0.45 or more. In a case in which the connecting portions 33 are situated at the approximate middle of the frictional portion 25 in the planar second direction E2, K1/S21 and K2/S21 are, for example, 0.60 or less, and may be 0.55 or less.

Fig. 5B is a plan view illustrating a modification of the structured body 20. The connecting portions 33 may be situated away from the middle of the frictional portion 25 in the planar second direction E2. For example, the dimension K1 of the first guide structures 31 may be smaller than the dimension K2 of the second guide structures 32. For example, K1/S21 may be 0.40 or less, and K2/S21 may be 0.60 or more. For example, K1/S21 may be 0.30 or less, and K2/S21 may be 0.70 or more.

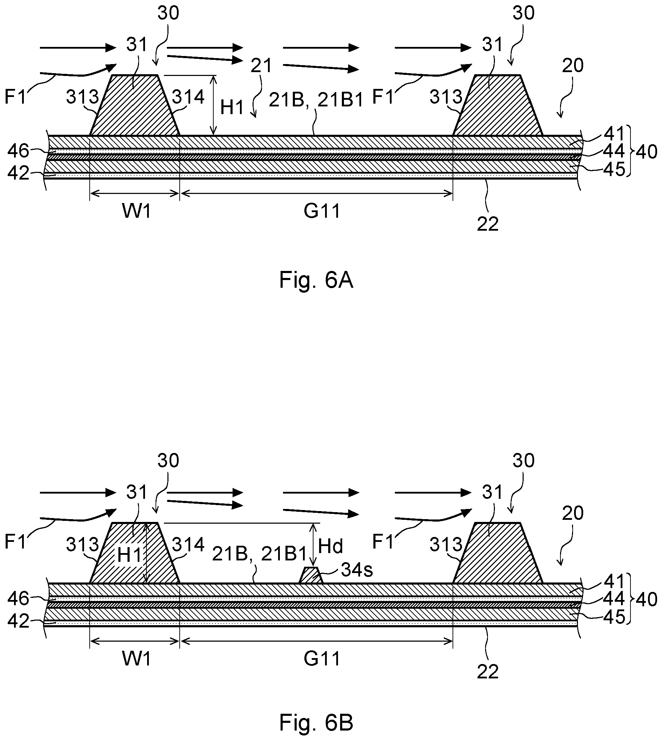

Next, a cross-sectional structure of the disturbance structure 30 will be described. Fig. 6A is a cross-sectional view of the structured body 20 in Fig. 4 as viewed from a VI-VI direction. The structured body 20 may include a first face 21 and a second face 22. The second face 22 is a face that is situated on an opposite side from the first face 21 in a thickness direction of the structured body 20. The second face 22 may be a flat face.

The first face 21 may include the base face 21B. For example, the structured body 20 may include a base body 40 that includes the base face 21B. The base face 21B is a region that has the greatest occupancy proportion in the first face 21. The base face 21B is distinguished from other regions of the first face 21 on the basis of distance from the second face 22 in the thickness direction of the structured body 20. The occupancy proportion of the base face 21B in the first face 21 is, for example, 50% or more, may be 60% or more, and may be 70% or more.

As illustrated in Fig. 6A, the first guide structures 31 of the disturbance structures 30 may protrude out with respect to the base face 21B in the thickness direction of the structured body 20. Such disturbance structures 30 will be referred to as protrusions. Although not illustrated, the second guide structures 32 and the connecting portions 33 of the disturbance structures 30 may also be protrusions.

The protrusions of the first guide structures 31 have a first height H1 from the base face 21B. The first height H1 is, for example, 1.0 mm or less, may be 600 µm or less, may be 400 µm or less, may be 300 µm or less, and may be 200 µm or less. Making the first height H1 to be small enables frictional resistance that the fluid F receives from the structured body 20 to be reduced. The first height H1 is, for example, 20 µm or more, may be 50 µm or more, and may be 100 µm or more.

In Fig. 6A, sign W1 denotes a dimension of the first guide structures 31 in the planar first direction E1. The dimension W1 is measured at the position at which the first guide structure 31 is in contact with the base face 21B. The dimension W1 may be set by a relation with the first height H1. W1/H1, which is the ratio of the dimension W1 with respect to the first height H1 is, for example, 0.3 or more, may be 0.5 or more, and may be 0.7 or more. W1/H1 is, for example, 3.0 or less, may be 2.0 or less, and may be 1.5 or less.

In Fig. 5A, sign W12 denotes a dimension of the first guide structures 31 in a direction orthogonal to the direction in which the first guide structures 31 extend. The dimension W12 is measured at the position at which the first guide structure 31 is in contact with the base face 21B, in the same way as with the sign W1. For W12/H1, which is the ratio of the dimension W12 with respect to the first height H1, the numerical value range of W1/H1 described above can be employed.

In Fig. 6A, sign G11 denotes a gap between two first guide structures 31 that are adjacently arrayed in the planar first direction E1. The gap G11 may be set by a relation with the first height H1. G11/H1, which is the ratio of the gap G11 with respect to the first height H1 is, for example, 1.0 or more, may be 3.0 or more, and may be 5.0 or more. Thus, fluid F1 that is diverted upward by colliding with the protrusions can be made to collide again with the protrusions on the downstream side, as illustrated in Fig. 6A. Accordingly, the fluid F flowing along the frictional portion 25 can be made to repeatedly collide with the first guide structures 31. G11/H1 is, for example, 12.0 or less, may be 10.0 or less, and may be 9.0 or less. Thus, the frequency of the fluid F colliding with the first guide structures 31 can be sufficiently increased. Accordingly, mixing of the fluid F at the boundary layer between the fluid F and the surface of the object 10 can be promoted. Hence, separation of the fluid can be suppressed.

The second guide structures 32 and the connecting portions 33 may be configured in the same way as the first guide structures 31.

For example, protrusions of the second guide structures 32 may have a second height H2. The second height H2 may be the same as the first height H1 described above, or may be different. The numerical value range of the first height H1 described above can be employed as the numerical value range of the second height H2.

For example, the second guide structures 32 may have a dimension W2 in the planar first direction E1. The dimension W2 may be set by a relation with the second height H2. The numerical value range of W1/H1 described above can be employed as the numerical value range of W2/H2, which is the ratio of the dimension W2 with respect to the second height H2.

For example, a gap G21 between two second guide structures 32 that are adjacently arrayed in the planar first direction E1 may be set by a relation with the second height H2. The numerical value range of G11/H1 described above can be employed as the numerical value range of G21/H2, which is the ratio of the gap G21 as to the second height H2.

For example, a dimension W22 of the second guide structures 32 in a direction orthogonal to the direction in which the second guide structures 32 extend may be set by a relation with the second height H2. The numerical value range of W12/H1 described above can be employed as the numerical value range of W22/H2, which is the ratio of the dimension W22 with respect to the second height H2.

An example is illustrated in Fig. 6A in which the fluid F1 that passes over the first guide structures 31 in the frictional portion 25 flows along the planar first direction E1. Although not illustrated, it is conceivable that part of the fluid F1 that passes over the first guide structures 31 will flow in a direction orthogonal to the direction in which the first guide structures 31 extend. In Fig. 5A, sign G12 denotes a gap between two first guide structures 31 in the direction orthogonal to the direction in which the first guide structures 31 extend. The gap G12 may be set by a relation with the first height H1, in the same way as with the gap G11. G12/H1 is, which is the ratio of the gap G12 as to the first height H1, for example, 1.0 or more, may be 3.0 or more, and may be 5.0 or more. Thus, fluid F1 that is diverted upward by colliding with the protrusion can be made to collide again with the protrusions on the downstream side. Accordingly, the fluid F flowing along the frictional portion 25 can be made to repeatedly collide with the first guide structures 31. G12/H1 is, for example, 12.0 or less, may be 10.0 or less, and may be 9.0 or less. Thus, the frequency of the fluid F colliding with the first guide structures 31 can be sufficiently increased. In light of the above, mixing of the fluid F at the boundary layer between the fluid F and the surface of the object 10 can be promoted. Hence, separation of the fluid can be suppressed.

In Fig. 5A, sign G22 denotes a gap between two second guide structures 32 in the direction orthogonal to the direction in which the second guide structures 32 extend. The gap G22 may be set by a relation with the second height H2, in the same way as with the gap G21. The numerical value range of G12/H1 described above can be employed as the numerical value range of G22/H2, which is the ratio of the gap G22 with respect to the second height H2.

As described above, the fluid F1 that is diverted upward by colliding with first guide structures 31 on the upstream side preferably collides with first guide structures 31 on the downstream side again. The base face 21B situated between two first guide structures 31 adjacently arrayed in the planar first direction E1 is also referred to as a valley region. In order for the fluid F1 to collide again with the first guide structure 31 on the downstream side, preferably, no large projection is disposed in the valley region 21B1. According to this configuration, the valley region 21B1 can be suppressed from disturbing the flow of the fluid F1. The gap G11 described above is equivalent to the dimension of the valley region 21B1 in the planar first direction E1.

Fig. 6B is a cross-sectional view of a modification of the structured body 20. A small projection 34s may be disposed on the base face 21B, situated between two first guide structures 31 adjacently arrayed in the planar first direction E1. The flow of the fluid F1 is hardly disturbed at all by the small projection 34s, as long as the height of the small projection 34s is small. Accordingly, the fluid F1 that has collided with the first guide structure 31 on the upstream side can be made to collide again with the first guide structure 31 on the downstream side.

In Fig. 6B, sign Hd denotes a distance from an apex of the protrusions of the first guide structures 31 to an apex of the small projection 34s, in the normal direction of the base face 21B. A range of the distance Hd that is desirable may be set relative to the first height H1 of the protrusions of the first guide structures 31. Hd/H1, which is a ratio of the distance Hd with respect to the first height H1 is, for example, 0.50 or more, may be 0.60 or more, may be 0.70 or more, may be 0.80 or more, and may be 0.90 or more. Hd/H1, which is the ratio of the distance Hd with respect to the first height H1 is, for example, 1.00 or less, may be 0.99 or less, and may be 0.98 or less.

A layer configuration of the structured body 20 will be described. The base body 40 making up the base face 21B may include a plurality of layers. For example, the base body 40 may include a first base material 41 making up the base face 21B. The first base material 41 may be a plastic film. The plastic film may be drawn plastic film, or may be undrawn plastic film. The material of the first base material 41 is, for example, polyvinyl chloride, polypropylene, polyethylene, polyester, or the like.

The base body 40 may include an adhesive layer 42 that makes up the second face 22. The adhesive layer 42 may have adhesiveness with respect to the surface of the object 10. The structured body 20 can be made to adhere to the surface of the object 10 using the adhesive layer 42.

The base body 40 may include a printed layer 44 that is situated between the first base material 41 and the adhesive layer 42. The printed layer 44 is a layer for displaying text, images, or the like, on the structured body 20. The base body 40 may include a second base material 45 that supports the printed layer 44. The base body 40 may include an adhesive layer 46 situated between the printed layer 44 and the first base material 41. The adhesive layer 46 can join the first base material 41 and the second base material 45 on which the printed layer 44 is provided.

The thickness of the base body 40 is, for example, 300 µm or less, may be 250 µm or less, may be 200 µm or less, and may be 150 µm or less. Accordingly, the base body 40 can be deformed to follow the form of the surface of the object 10. The thickness of the base body 40 is, for example, 50 µm or more, may be 70 µm or more, and may be 100 µm or more.

The formation method of the disturbance structures 30 is not limited in particular. For example, the disturbance structures 30 may be formed by forming a resin layer on the base face 21B of the base body 40, and thereafter processing the resin layer using a die such as a contour roll or the like. In a case in which the disturbance structures 30 are protrusions, the protrusions may be formed by selectively applying the material to make up the protrusions on the base face 21B by inkjet method or the like. The disturbance structures 30 may be subjected to curing processing following implementation of a process to set the form of the disturbance structures 30, such as the protrusions or the like. For example, in a case in which the material of the disturbance structure 30 is UV-curable, the disturbance structures 30 may be irradiated by UV rays.

Although not illustrated, the disturbance structures 30 may be integrally formed with the first base material 41. "Integrally" means that there is no interface present between the disturbance structures 30 and the first base material 41. For example, first, the first base material 41 that has a greater thickness than the first height H1 may be prepared, and next, the first base material 41 may be processed by using a contour roll or the like. Thus, the disturbance structures 30 that are integral with the first base material 41 are obtained.

For example, first, a die is prepared. Next, a raw material having fluidity is poured into the die. The raw material may contain resin. The raw material may contain resin and a solvent. Subsequently, the raw material is cured in the die. For example, the solvent is evaporated by heating the raw material. Thus, the structured body 20 is formed within the die. Subsequently, the structured body 20 is removed from the die. Thus, the disturbance structures 30 that are integral with the first base material 41 are obtained.

Fig. 6B is a cross-sectional view illustrating an example of the structured body 20 in a state before being attached to the object 10. The structured body 20 may include a separator 43 that is in contact with the adhesive layer 42. The structured body 20 may be distributed in a state with the separator 43 provided thereto. In a process of attaching the structured body 20 to the object 10, the separator 43 is removed, and thereafter the structured body 20 is attached to the object 10.

The positions, forms, and so forth, of the components on the first face 21 of the structured body 20, are measured by using a laser displacement sensor. The above-described length S1, width S21, width S22, first inclination angle φ1, second inclination angle φ2, first height H1, second height H2, gap G11, gap G21, and so forth, are calculated on the basis of measurement results.

Next, the smooth portions 26 will be described. The smooth portions 26 may include the base face 21B described above. The occupancy proportion of the base face 21B in the frictional portions 25 will be referred to as first base proportion R1. The occupancy proportion of the base face 21B in the smooth portions 26 will be referred to as second base proportion R2. The second base proportion R2 is greater than the first base proportion R1. The second base proportion R2 is, for example, 70% or more, may be 80% or more, may be 90% or more, may be 95% or more, may be 99% or more, and may be 100%.

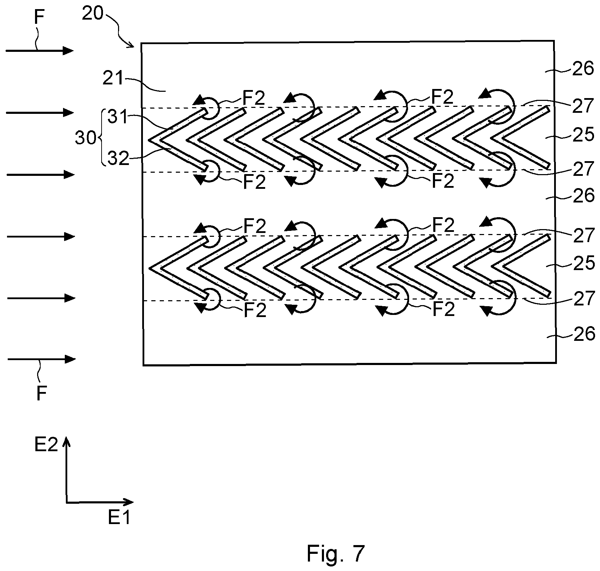

Fig. 7 is a plan view illustrating an example of vortices generated in the structured body 20. The frictional portions 25 and smooth portions 26 spread in the planar first direction E1. The frictional portions 25 include the first guide structures 31 extending toward the first smooth portions 26 at the first inclination angle φ1. Accordingly, vortices F2 of the fluid can be effectively generated along the boundary lines 27 between the frictional portions 25 and the first smooth portions 26. For example, energy of the vortices F2 can be sufficiently raised even in cases in which the first height of the protrusions of the first guide structures 31 is small. Also, the frictional portions 25 include the second guide structures 32 extending toward the second smooth portions 26 at the second inclination angle φ2. Accordingly, the vortices F2 of the fluid can be effectively generated along the boundary lines 27 between the frictional portions 25 and the second smooth portions 26. For example, the energy of the vortices F2 can be sufficiently raised even in cases in which the first height of the protrusions of the second guide structures 32 is small. Accordingly, separation of the fluid F can be suppressed while reducing frictional resistance that the fluid F receives from the structured body 20.

As illustrated in Fig. 7, the energy of the vortices F2 may increase the farther toward the downstream side. Accordingly, separation of the fluid F can be suppressed further.

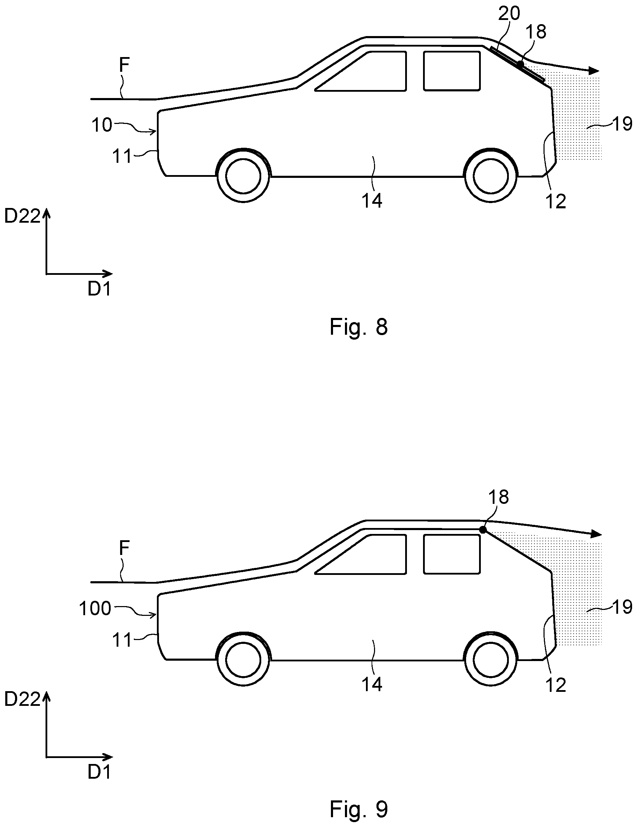

Fig. 8 is a diagram illustrating an example of the way in which the fluid F flows along the surface of the object 10 including the structured body 20. In the example that is illustrated in Fig. 8, the structured body 20 is attached to the inclined portion of the rear face 12. Accordingly, separation of the fluid F at the inclined portion of the rear face 12 can be suppressed.

Fig. 9 is a diagram illustrating an example of the way in which the fluid F flows along a surface of an object 100 according to a comparative form. The object 100 according to the comparative form does not include the structured body 20. Accordingly, the fluid F separates from the object 100 at the proximity of the upstream-side end portion of the inclined portion of the rear face 12, and it is thought that a dead water region 19 will be generated between the fluid F and the object 100. As a result, the pressure resistance that the object 100 receives from the fluid F increases.

Conversely, in the present embodiment, the structured body 20 can suppress the fluid F from separating at the inclined portion of the rear face 12. For example, a separation point 18 at which separation of the fluid F from the object 10 occurs can be made to be situated further downstream as compared to the case of the comparative form. Accordingly, the pressure resistance that the object 10 receives from the fluid F can be suppressed as compared to the case of the comparative form.

The first embodiment that is described above can be changed variously. Other embodiments will be described below, with reference to the drawings as necessary. In the description below, and in the drawings used for description below, portions that can be configured in the same way as those in the first embodiment described above will be denoted by signs that are the same signs used to denote corresponding portions in the first embodiment described above. Repetitive description will be omitted. Also, in cases in which advantageous effects that are obtained in the first embodiment described above can clearly be obtained in another embodiment, description thereof may be omitted in some cases.

### (First Modification)

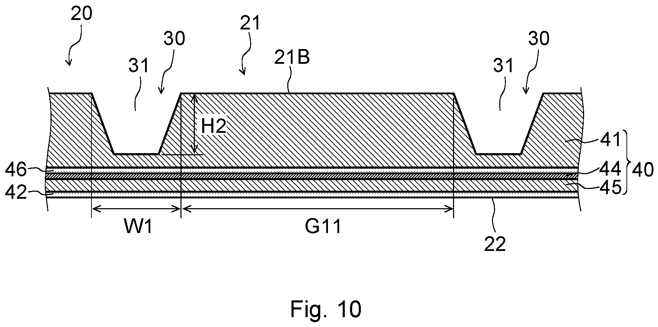

Fig. 10 is a cross-sectional view illustrating the structured body 20 according to a first modification. As illustrated in Fig. 10, the disturbance structures 30 may be recessed with respect to the base face 21B in the thickness direction of the structured body 20. Such a disturbance structures 30 are also referred to as recesses. Using recesses enables the frictional resistance due to the structured body 20 to be suppressed. Also, damage to the disturbance structures 30 can be suppressed as compared with a case of using protrusions.

The recesses have a second depth H2 from the base face 21B. The second depth H2 is, for example, 400 µm or less, may be 300 µm or less, and may be 200 µm or less. Making the second depth H2 to be small enables frictional resistance that the fluid F receives from the structured body 20 to be reduced. The second depth H2 is, for example, 20 µm or more, may be 50 µm or more, and may be 100 µm or more.

### (Second Modification)

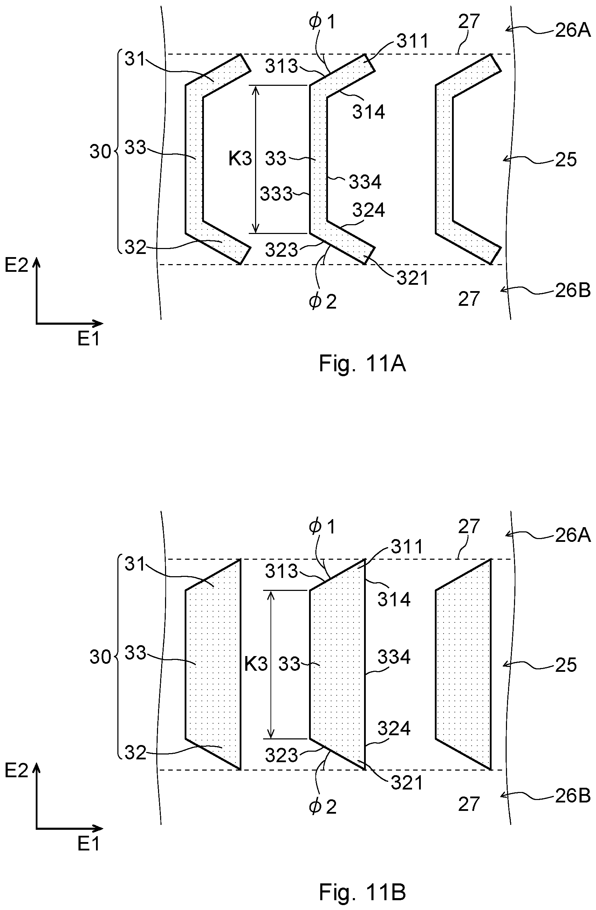

Fig. 11A is a plan view illustrating the disturbance structures 30 according to a second modification. As illustrated in Fig. 11A, the connecting portions 33 that connect the first guide structures 31 and the second guide structures 32 may extend in the second direction D2. The connecting portions 33 have a dimension K3 in the planar second direction E2. K3/S21, which is the ratio of the dimension K3 with respect to the width S21 described above is, for example, 0.20 or more, may be 0.30 or more, and may be 0.40 or more.

The first downstream faces 314 of the first guide structures 31 may extend in parallel to the first upstream faces 313. The second downstream faces 324 of the second guide structures 32 may extend in parallel to the second upstream faces 323.

The connecting portions 33 include third upstream faces 333 and third downstream faces 334. The third upstream faces 333 are side faces that are situated on the upstream side of the connecting portions 33, in the planar first direction E1. The third downstream faces 334 are side faces that are situated on the downstream side of the connecting portions 33 in the planar first direction E1. The third downstream faces 334 of the connecting portions 33 may extend in parallel to the third upstream faces 333. For example, the third upstream faces 333 and the third downstream faces 334 may extend in the second direction D2.

### (Third Modification)

Fig. 11B is a plan view illustrating the disturbance structures 30 according to a third modification. The connecting portions 33 according to the present modification also extend in the second direction D2, in the same way as in the case illustrated in Fig. 11A.

The first guide structures 31 may include portions where the width thereof decrease the farther toward the first end portions 311. In the same way, the second guide structures 32 may include portions where the distance between the second upstream faces 323 and the second downstream faces 324 decreases the farther toward the second end portions 321. For example, the first downstream faces 314 of the first guide structures 31, the second downstream faces 324 of the second guide structures 32, and the third downstream faces 334 of the connecting portions 33, may each extend in the second direction D2. For example, the disturbance structures 30 may be trapezoidal in plan view.

### (Fourth Modification)

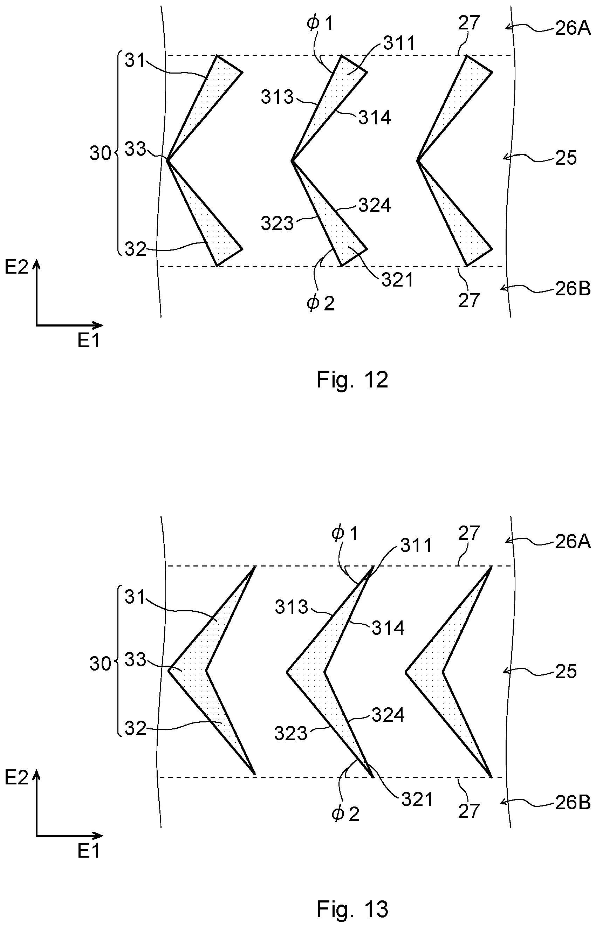

Fig. 12 is a plan view illustrating the disturbance structures 30 according to a fourth modification. As illustrated in Fig. 12, the first guide structures 31 may include portions in which the width thereof increases the farther toward the first end portions 311. For example, the first guide structures 31 may include portions in which the distance between the first upstream faces 313 and the first downstream faces 314 increases the farther toward the first end portions 311. In the same way, the second guide structures 32 may include portions in which the distance between the second upstream faces 323 and the second downstream faces 324 increases the farther toward the second end portions 321.

### (Fifth Modification)

Fig. 13 is a plan view illustrating the disturbance structures 30 according to a fifth modification. As illustrated in Fig. 13, the first guide structures 31 may include portions in which the width thereof decreases the farther toward the first end portions 311. For example, the first guide structures 31 may include portions in which the distance between the first upstream faces 313 and the first downstream faces 314 decreases the farther toward the first end portions 311. In the same way, the second guide structures 32 may include portions in which the distance between the second upstream faces 323 and the second downstream faces 324 decreases the farther toward the second end portions 321.

### (Sixth Modification)

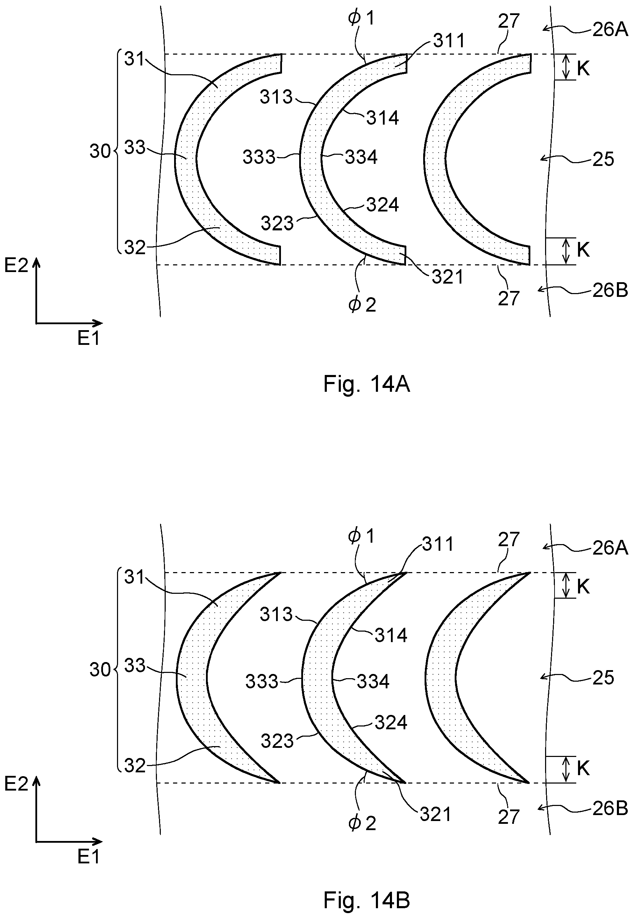

Fig. 14A is a plan view illustrating the disturbance structures 30 according to a sixth modification. As illustrated in Fig. 14A, the disturbance structures 30 may have curved forms in plan view. For example, the disturbance structures 30 may have curved forms that are protruding toward the upstream side in plan view. In this case, the first inclination angle φ1 of the first guide structures 31 is calculated as an average value of inclination angle with respect to the planar first direction E1, at each position of the first end portions 311 having the dimension K. Specifically, the inclination angle of the first end portions 311 divided equally into ten parts is measured at each position in the planar first direction E1. In the same way, the second inclination angle φ2 of the second guide structures 32 is calculated as an average value of inclination angle with respect to the planar first direction E1, at each position of the second end portions 321 having the dimension K.

### (Seventh Modification)

Fig. 14B is a plan view illustrating the disturbance structures 30 according to a seventh modification. In the same way as with the example illustrated in Fig. 14A, the disturbance structures 30 may have curved forms in plan view. Further, in the same way as with the case of the example illustrated in Fig. 13, the first guide structures 31 may include portions in which the distance between the first upstream faces 313 and the first downstream faces 314 decreases the farther toward the first end portions 311. In the same way, the second guide structures 32 may include portions in which the distance between the second upstream faces 323 and the second downstream faces 324 decreases the farther toward the second end portions 321.

### (Eighth Modification)

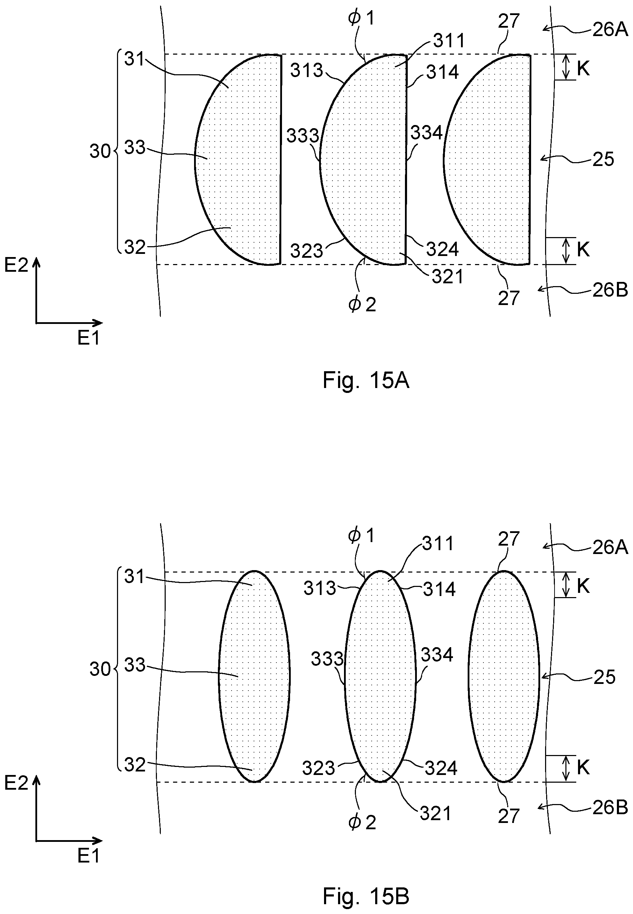

Fig. 15A is a plan view illustrating the disturbance structures 30 according to an eighth modification. The disturbance structures 30 according to the present modification also have curved forms that are protruding toward the upstream side in plan view, in the same way as in the case of the examples illustrated in Fig. 14A and Fig. 14B.

Each of the first downstream faces 314 of the first guide structures 31, the second downstream faces 324 of the second guide structures 32, and the third downstream faces 334 of the connecting portions 33 may extend in the second direction D2. For example, the disturbance structures 30 may have half-moon forms in plan view.

### (Ninth Modification)

Fig. 15B is a plan view illustrating the disturbance structures 30 according to a ninth modification. The disturbance structures 30 according to the present modification may also have curved forms that are protruding toward the upstream side in plan view, in the same way as in the case of the examples illustrated in Fig. 14A and Fig. 14B.

The disturbance structures 30 may also have curved forms that are protruding toward the downstream side in plan view. The first downstream faces 314 of the first guide structures 31, the second downstream faces 324 of the second guide structures 32, and the third downstream faces 334 of the connecting portions 33 may be continuous so as to realize curved forms that are protruding toward the downstream side.

### (Tenth Modification)

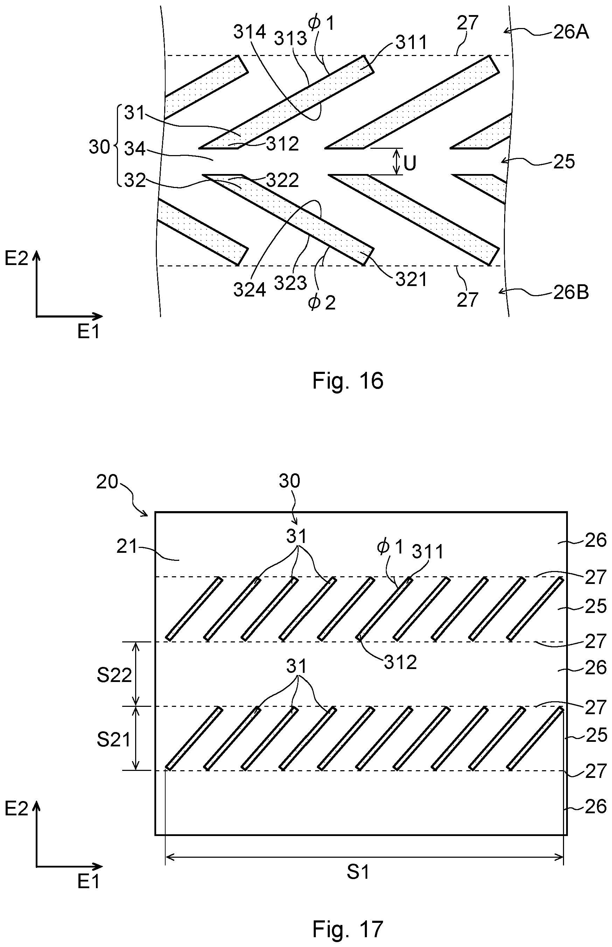

Fig. 16 is a plan view illustrating the disturbance structures 30 according to a tenth modification. As illustrated in Fig. 16, the first guide structures 31 and the second guide structures 32 do not have to be connected. That is to say, the disturbance structures 30 may include gaps 34 that are situated between the first guide structures 31 and the second guide structures 32 in the planar second direction E2. Sign 312 denotes end portions (also referred to as third end portions) of the first guide structures 31 facing the second guide structures 32 in the planar second direction E2. Sign 322 denotes end portions (also referred to as fourth end portions) of the second guide structures 32 facing the first guide structures 31 in the planar second direction E2.

In a case in which a dimension U of the gaps 34 in the planar second direction E2 is small, effects that the gaps 34 have on the fluid F are miniscule. In a case in which the dimension U is small, regions including the gaps 34 are interpreted as part of the frictional portion 25 including the first guide structures 31 and the second guide structures 32, and not the smooth portion 26. The dimension U may be, for example, 5.0 mm or less, may be 3.0 mm or less, may be 1.0 mm or less, may be 0.5 mm or less, and may be 0.1 mm or less. The dimension U may be set by a relation with the width S22 of the smooth portion 26. U/S22, which is the ratio of the dimension U with respect to the width S22 is, for example, 1/5 or less, may be 1/10 or less, and may be 1/20 or less.

### (Eleventh Modification)

Fig. 17 is a plan view illustrating the structured body 20 according to an eleventh modification. As illustrated in Fig. 17, the structured body 20 may include the first guide structures 31, but does not have to include the second guide structures 32. For example, the first end portions 311 of the first guide structures 31 extending at the first inclination angle φ1 with respect to the planar second direction E2 may come into contact with the first smooth portion 26, and the third end portions 312 of the first guide structures 31 may come into contact with the second smooth portion 26. In the present modification as well, generation of vortices at the boundaries between the frictional portions 25 and the first smooth portions 26 is promoted. Accordingly, pressure resistance that the object 10 receives from the fluid F can be reduced.

### (Twelfth Modification)

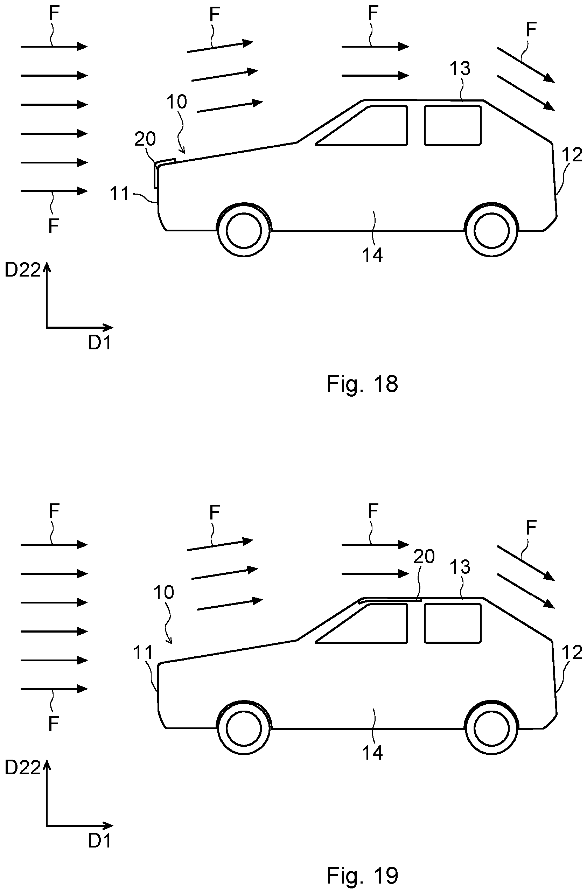

Fig. 18 is a plan view illustrating a modification of the object 10. As illustrated in Fig. 18, the structured body 20 may be attached to the front face 11 of the object 10. Accordingly, separation of the fluid F at the front of the object 10 can be suppressed from occurring.

### (Thirteenth Modification)

In the embodiment described above, an example has been given in which the structured body 20 is attached to the object 10. However, the relation between the structured body 20 and the object 10 is not restricted in particular. For example, as illustrated in Fig. 19, the structured body 20 may be a component that the object 10 is equipped with at the time of distribution of the object 10. For example, the structured body 20 may be a component making up part of the object 10. For example, in a case in which the object 10 is an automobile, the structured body 20 may be one component making up the object 10, such as a door visor or the like. In other words, one component making up the object 10 may include features of the structured body 20, such as the frictional portions 25, the smooth portions 26, and so forth. In this case, the structured body 20 may be a molded article that is fabricated by injection molding of resin, for example.

### (Other Modifications)

In the above embodiment, an example has been given in which the object 10 including the structured body 20 is a moving body that can move by itself. However, the object 10 is not limited in particular, as long as the object 10 is in contact with the fluid F. For example, the object 10 may be a fixed object that does not move by itself, but controls the flow of the fluid F.

The moving body may be, for example, an automobile such as a passenger car, a truck, a bus, or the like, a railway vehicle such as a train, a high-speed rail train, a locomotive, or the like, an aircraft such as an airplane, a helicopter, a drone, or the like, or a bicycle or the like. These moving bodies move through the atmosphere. The fluid that the moving body comes into contact with is air. The object 10 including the structured body 20 may be part of these moving bodies. For example, the object 10 may be a component that makes up the moving body, such as a body or the like.

The fixed object may be, for example, piping such as a duct, a gas line, or the like, a vane of a windmill, a vent, louvers, or the like, of air-conditioning equipment such as an air conditioner, or the like. These fixed objects control the flow of gasses. The object 10 that includes the structured body 20 may be part of these fixed objects. For example, the object 10 may be a component that makes up a surface of each of these fixed objects.

### EXAMPLES

Next, the present disclosure will be described in further detail by way of Examples, but the present embodiment is not limited to the description of the following Examples, insofar as the gist thereof is not departed from.

### (EXAMPLE A1)

Effects of the structured body 20 were verified by wind tunnel experiments, in which an airflow is made to collide with the object 10 to which the structured body 20 is attached. Specifically, in a state in which the structured body 20 was applied to upstream-side portions of the upper face 13 and the side faces 14 of an object having a cuboid form, an airflow was made to collide with the object 10. The dimensions of the object are 1250 mm in length in the direction of flow of the airflow, 260 mm in width, and 387 mm in height.

A method of fabricating the structured body 20 will be described. First, a second film was prepared that includes the second base material 45 including polyvinyl chloride, and the adhesive layer 42. For the second film, general-purpose inkjet media MPI 1105, manufactured by Avery Dennison Corporation, was used. Subsequently, the printed layer 44 including a motif was formed on the second base material 45 of the second film. Subsequently, the first base material 41 is laminated on the printed layer 44, with the adhesive layer 46 interposed therebetween. For a first film including the first base material 41 and the adhesive layer 46, wrapping film DOL 1460 manufactured by Avery Dennison Corporation was used. Thus, a laminate making up the base body 40 was fabricated.

Next, the base body 40 was coated with a material that is UV-curable by inkjet method. Thereafter, the material was cured using UV rays. Accordingly, the disturbance structures 30 including the first guide structures 31 and the second guide structures 32 made up of the protrusions, illustrated in Fig. 4, were formed on the base body 40. In this way, the structured body 20 including the frictional portions 25 that include the first guide structures 31 and the second guide structures 32, and the smooth portions 26, was fabricated.

The configuration of the structured body 20 is as follows.
- Length S1 of frictional portion 25: 200 mm
- Length of smooth portion 26: 200 mm
- Width S21 of frictional portion 25: 7 mm
- Width S22 of smooth portion 26: 7 mm
- First inclination angle φ1 of first guide structure 31: 30°
- First height H1 of protrusion of first guide structure 31: 0.16 mm
- Width W12 of protrusion of first guide structure 31: 0.14 mm
- Gap G12 between two first guide structures 31: 0.26 mm
- Second inclination angle φ2 of second guide structure 32: 30°
- Second height H2 of protrusion of second guide structure 32: 0.16 mm
- Width W22 of protrusion of second guide structure 32: 0.14 mm
- Gap G22 between two second guide structures 32: 0.26 mm

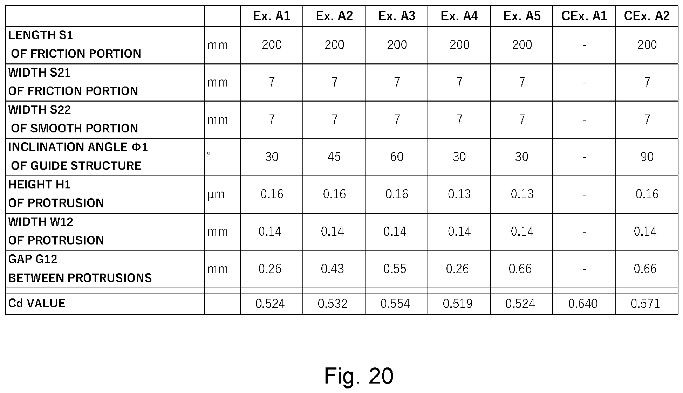

Drag coefficient in a case of setting the windspeed of the airflow to 30 m/s was measured. The drag coefficient is also referred to as Cd value. The drag coefficient was calculated on the basis of drag generated at the object 10 due to the airflow. The drag was measured using a load cell via a wire fixed to the object 10. The results are shown in Fig. 20.

### (EXAMPLE A2)

The drag coefficient was measured in the same way as with the case of Example A1, except for changing the first inclination angle φ1 and gap G12 of the first guide structures 31, and the second inclination angle φ2 and gap G22 of the second guide structures 32 as follows. The results are shown in Fig. 20.
- First inclination angle φ1 of first guide structure 31: 45°
- Gap G12 between two first guide structures 31: 0.43 mm
- Second inclination angle φ2 of second guide structure 32: 45°
- Gap G22 between two second guide structures 32: 0.43 mm

### (EXAMPLE A3)

The drag coefficient was measured in the same way as with the case of Example A1, except for changing the first inclination angle φ1 and gap G12 of the first guide structures 31, and the second inclination angle φ2 and gap G22 of the second guide structures 32 as follows. The results are shown in Fig. 20.
- First inclination angle φ1 of first guide structure 31: 60°
- Gap G12 between two first guide structures 31: 0.55 mm
- Second inclination angle φ2 of second guide structure 32: 60°
- Gap G22 between two second guide structures 32: 0.55 mm

### (EXAMPLE A4)

The drag coefficient was measured in the same way as with the case of Example A1, except for changing the first height H1 of the first guide structures 31 and the second height H2 of the second guide structures 32 as follows. The results are shown in Fig. 20.
- First height H1 of protrusions of first guide structure 31: 0.13 mm
- Second height H2 of protrusions of second guide structure 32: 0.13 mm

### (EXAMPLE A5)

The drag coefficient was measured in the same way as with the case of Example A1, except for changing the gap G12 of the first guide structures 31 and the gap G22 of the second guide structures 32 as follows. The results are shown in Fig. 20.
- Gap G12 between two first guide structures 31: 0.66 mm
- Gap G22 between two second guide structures 32: 0.66 mm

### (COMPARATIVE EXAMPLE A1)

The drag coefficient was measured in the same way as with the case of Example A1, except for not attaching the structured body 20 to the object 10. The results are shown in Fig. 20.

### (COMPARATIVE EXAMPLE A2)

The drag coefficient was measured in the same way as with the case of Example A1, except for changing the first inclination angle φ1 and gap G12 of the first guide structures 31, and the second inclination angle φ2 and gap G22 of the second guide structures 32 as follows. The results are shown in Fig. 20.
- First inclination angle φ1 of first guide structure 31: 90°
- Gap G12 between two first guide structures 31: 0.66 mm
- Second inclination angle φ2 of second guide structure 32: 90°
- Gap G22 between two second guide structures 32: 0.66 mm

From comparing Examples A1 to A5 and Comparative Example A1, it can be seen that attaching the structured body 20 to the object 10 enabled the drag coefficient to be reduced.

From comparing Examples A1 to A5 and Comparative Example A2, it can be seen that inclining the first guide structures 31 and the second guide structures 32 by an angle smaller than 90° with respect to the planar first direction E1 enabled the drag coefficient to be reduced.

### (EXAMPLE A11)

The structured body 20 was fabricated in the same way as with the case of Example A1. The configuration of the structured body 20 is as follows.
- Length S1 of frictional portion 25: 105 mm
- Width S21 of frictional portion 25: 7 mm
- Width S22 of smooth portion 26: 7 mm
- First inclination angle φ1 of first guide structure 31: 30°
- First height H1 of protrusion of first guide structure 31: 0.15 mm
- Width W12 of protrusion of first guide structure 31: 0.14 mm
- Gap G12 between two first guide structures 31: 1.40 mm
- Second inclination angle φ2 of second guide structure 32: 30°
- Second height H2 of protrusion of second guide structure 32: 0.15 mm
- Width W22 of protrusion of second guide structure 32: 0.14 mm
- Gap G22 between two second guide structures 32: 1.40 mm

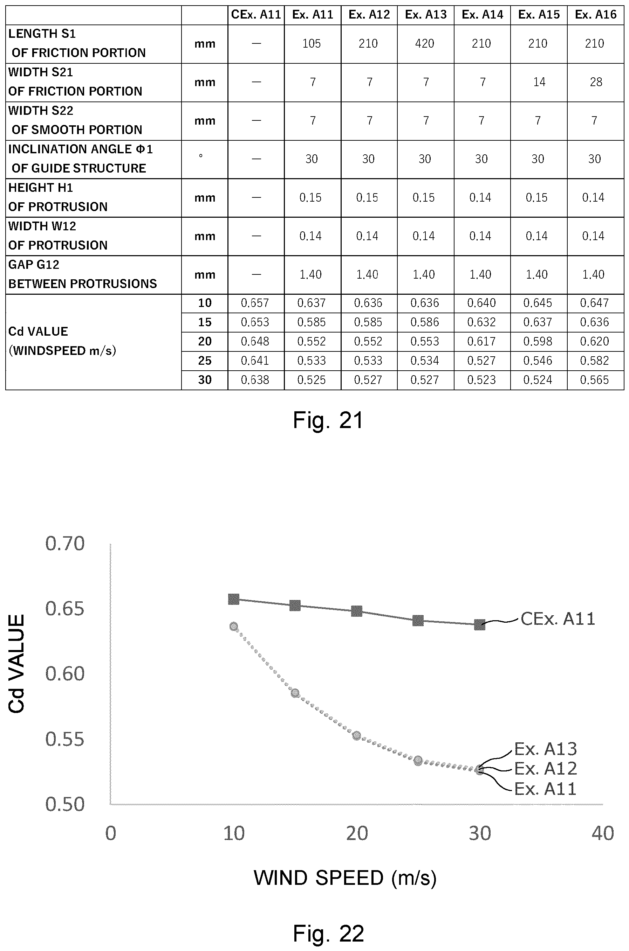

Next, in a state in which the structured body 20 was applied to upstream-side portions of the upper face 13 and the side faces 14 of an object having a cuboid form, an airflow was made to collide with the object 10, in the same way as in Example A1. Measurement results of the drag coefficient are shown in Fig. 21 and Fig. 22.

### (EXAMPLES A12 AND A13)

The drag coefficient was measured in the same way as with the case of Example A11, except for changing the length S1 of the frictional portion 25 as shown in Fig. 21. Measurement results are shown in Fig. 21 and Fig. 22.

### (EXAMPLES A14 TO A16)

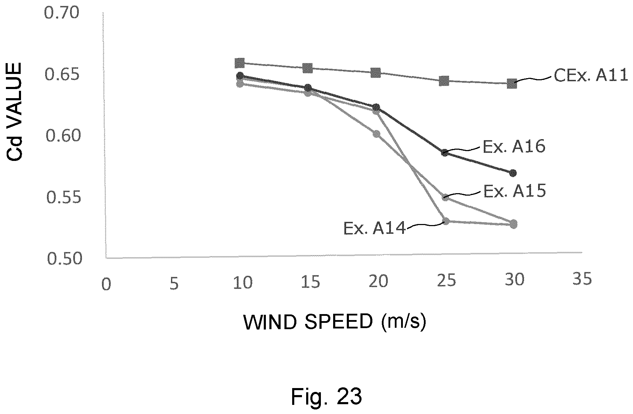

The drag coefficient was measured in the same way as with the case of Example A12, except for changing the width S21 of the frictional portion 25 as shown in Fig. 21. Measurement results are shown in Fig. 21 and Fig. 23.

### (COMPARATIVE EXAMPLE A11)

The drag coefficient was measured in the same way as with the case of Example A11, except for not attaching the structured body 20 to the object 10. The results are shown in Fig. 21 to Fig. 23.

It can be seen from Fig. 22 that in a case in which the length S1 of the frictional portion 25 is within a range of 105 mm to 420 mm, the drag coefficient was generally constant regardless of the length S1.

It can be seen from Fig. 23 that in the region of high windspeed, the greater the width S21 of the frictional portion was, the greater the drag coefficient tended to be. The frictional resistance is thought to have increased due to the width S21 of the frictional portion becoming greater.

### (EXAMPLES A21 TO A26)

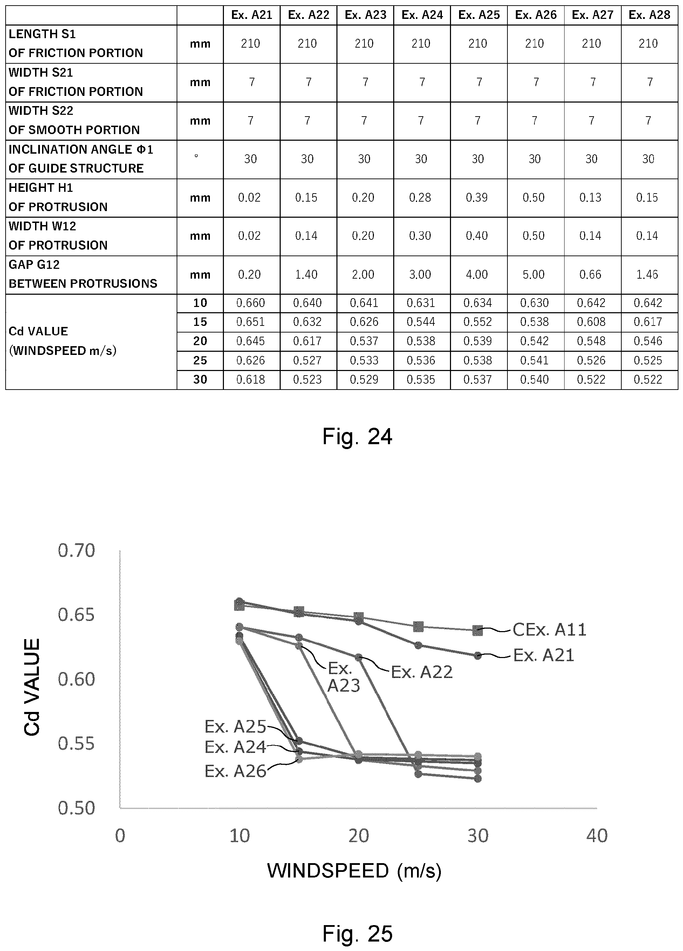

The drag coefficient was measured in the same way as with the case of Example A12, except for changing the height H1 of the protrusions of the first guide structures 31, the width W12 of the protrusions, and the gap G12, as shown in Fig. 24. Although not shown in Fig. 24, the second height H2 of the protrusions of the second guide structures 32, the width W22 of the protrusions, and the gap G22, are the same as the height H1 of the protrusions of the first guide structures 31, the width W12 of the protrusions, and the gap G12. Measurement results are shown in Fig. 24 and Fig. 25.

### (EXAMPLES A27 AND A28)

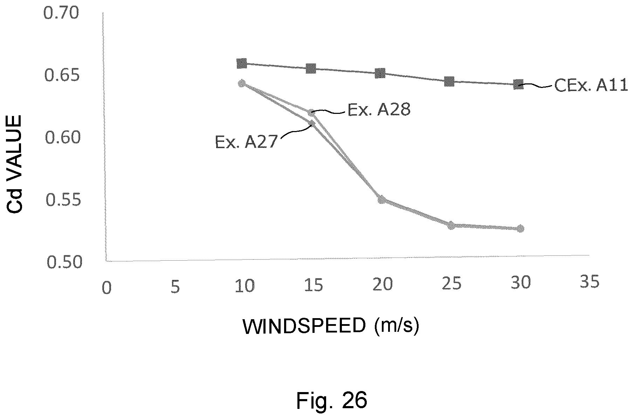

The drag coefficient was measured in the same way as with the case of Example A12, except for changing the height H1 of the protrusions of the first guide structures 31, the width W12 of the protrusions, and the gap G12, as shown in Fig. 24. Although not shown in Fig. 24, the second height H2 of the protrusions of the second guide structures 32, the width W22 of the protrusions, and the gap G22, are the same as the height H1 of the protrusions of the first guide structures 31, the width W12 of the protrusions, and the gap G12. Measurement results are shown in Fig. 24 and Fig. 26.

It can be seen from the comparison of Comparative Example A11 and Example A21 in Fig. 25 that reduction in the drag coefficient was confirmed even in the case of the height H1 of the protrusions being 20 µm. It can be seen from the comparison of Examples A22 to A26 in Fig. 25 that the greater the height H1 of the protrusions was, the lower the speed was at which the effects of reducing the drag coefficient were manifested.

It can be seen from Fig. 26 that in a case in which the ratio of the gap G12 as to the height H1 of the protrusions is within a range of 5 to 10, the drag coefficient was generally constant regardless of the ratio.

A second embodiment of the present disclosure will be described. The second embodiment also relates to a structured body that comes into contact with a fluid, the same as with the first embodiment. In the description of the second embodiment, portions that can be configured in the same way as those in the first embodiment described above, or modifications thereof, will be denoted by signs that are the same signs used to denote corresponding portions in the first embodiment described above or modifications thereof. Repetitive description will be omitted. Also, in cases in which advantageous effects that are obtained in the first embodiment described above or modifications thereof can clearly be obtained in the second embodiment, description thereof may be omitted in some cases.

Separation of fluid readily occurs at portions where the surface of the object is curved. The second embodiment has been made giving consideration to this point. It is an object of the second embodiment to provide a structured body that suppresses separation of fluid from occurring at portions where the object is curved.

The second embodiment relates to the following [1] to [20].
[1] A structured body for reducing resistance of a fluid, the structured body including
   a first face that includes a curved face and comes into contact with a fluid,
   a frictional portion that is situated on at least the curved face, and that spreads in a planar first direction that is a direction of curving of the curved face, and
   a smooth portion that is situated on at least the curved face and that is adjacent to the frictional portion in a planar second direction that intersects the planar first direction.
[2] The structured body according to [1], in which a boundary line between the frictional portion and the smooth portion may extend in parallel to the planar first direction.
[3] The structured body according to [1] or [2], in which the frictional portion may have a length of 30 mm or more and 1000 mm or less in the planar first direction.
[4] The structured body according to any one of [1] to [3], in which the frictional portion may have a width of 0.2 mm or more and 50 mm or less in a direction orthogonal to the planar first direction.
[5] The structured body according to any one of [1] to [4], in which the smooth portion may include a plurality of flow-rectifying structures extending in the planar first direction.
[6] The structured body according to any one of [1] to [5], in which the frictional portion may have a first arithmetic mean height and a first maximal height, and the smooth portion may have a second arithmetic mean height that is smaller than the first arithmetic mean height, and a second maximal height that is smaller than the first maximal height.
[7] The structured body according to [6], in which a ratio of the first maximal height as to the first arithmetic mean height may be 5 or more.
[8] The structured body according to any one of [1] to [5], in which the frictional portion may include a plurality of disturbance structures that are arrayed in the planar first direction and that disturb a flow of the fluid.
[9] A structured body for reducing resistance of a fluid, the structured body including
   a first face that includes a curved face and comes into contact with the fluid, and
   a frictional portion that is situated on at least the curved face, and that spreads in a planar first direction that is a direction of curving of the curved face, in which
   the frictional portion includes a disturbance structure that extends in a planar second direction that intersects the planar first direction.
[10] The structured body according to [8] or [9], in which the first face may include a base face, and the disturbance structure may protrude with respect to the base face in a thickness direction of the structured body.
[11] The structured body according to [10], in which the disturbance structure may have a first height from the base face, and the first height may be 20 µm or more and 1.0 mm or less.
[12] The structured body according to [11], in which a ratio of gaps between the plurality of disturbance structures adjacently arrayed in the planar first direction, with respect to the first height, may be 1.0 or more and 12.0 or less.
[13] The structured body according to [8] or [9], in which the first face may include a base face, and the disturbance structure may be recessed with respect to the base face in a thickness direction of the structured body.
[14] The structured body according to [8] and [10], in which the frictional portion may include the base face at a first base proportion, and the smooth portion may include the base face at a second base proportion that is higher than the first base proportion.
[15] The structured body according to any one of [8] to [14], in which the first face may include a first region that includes the curved face, and a second region that is arrayed with the first region in the planar first direction and is smooth in comparison with the first region, and a gap between two of the disturbance structures that are adjacently arrayed in the planar first direction in the first region may be greater than a gap between two of the disturbance structures that are adjacently arrayed in the planar first direction in the second region.
[16] The structured body according to any one of [1] to [15], in which a curvature angle of the curved face may be 30° or greater.
[17] An object that comes into contact with a fluid, the object including
   a curved portion, and
   the structured body according to any one of [1] to [16] that is attached to the curved portion.
[18] An object that comes into contact with a fluid, the object including
   a component including a curved portion, in which
   the component is made up of the structured body according to any one of [1] to [16].
[19] The object according to [17] or [18] may be a moving body or part of a moving body.
[20] The object according to [17] or [18] may control a flow of a fluid.

According to the second embodiment, separation of the fluid can be suppressed from occurring at portions where the object is curved.

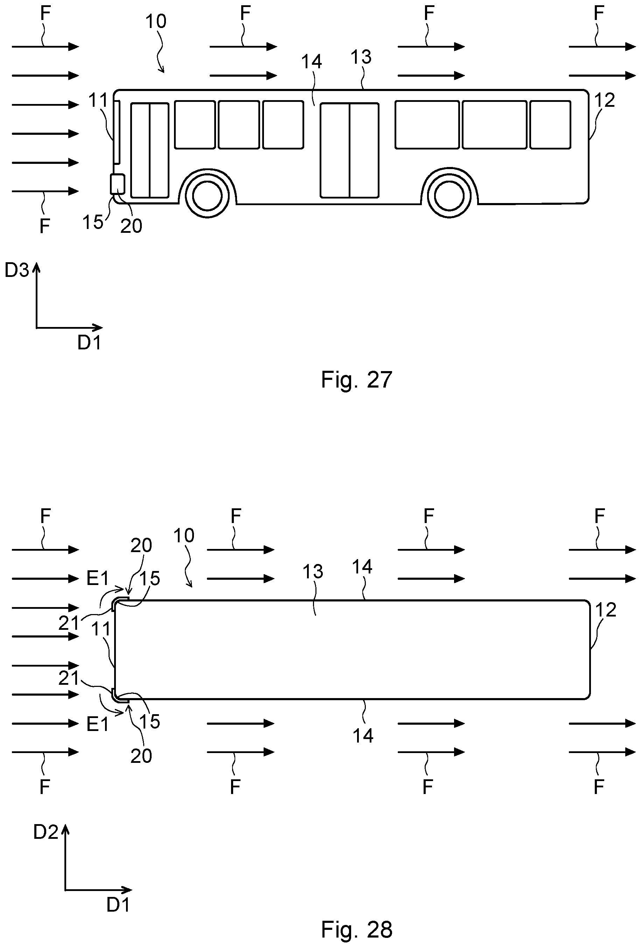

Configurations of the structured body 20 according to the second embodiment, and the object 10 that includes the structured body 20, will be described in detail below with reference to the drawings. Fig. 27 is a side view illustrating an example of the object 10. Fig. 28 is a plan view illustrating an example of the object 10. The object 10 may be a moving body such as a bus or the like, as illustrated in Fig. 27 and Fig. 28.

The object 10 may include the front face 11 and the rear face 12. The front face 11 is a face of the object 10 that is situated on the upstream side in the direction of flow of the fluid F. The fluid F collides with the front face 11. The rear face 12 is a face of the object 10 that is situated on the downstream side in the direction of flow of the fluid F. The rear face 12 is situated on the opposite side of the front face 11 in the direction of flow of the fluid F.

The direction of flow of the fluid F is the relative direction of movement of the fluid F with respect to the object 10. In the example illustrated in Fig. 27 and Fig. 28, a situation in which the object 10 travels forward is assumed. The direction of flow of the fluid F is referred to as the first direction, and is denoted by sign D1. Signs D2 and D3 respectively denote the second direction and the third direction. The second direction D2 and the third direction D3 are each orthogonal to the first direction D1. Also, the second direction D2 and the third direction D3 are orthogonal to each other. In the example illustrated in Fig. 27 and Fig. 28, the second direction D2 is a direction that is orthogonal to the first direction D1 and also follows a horizontal plane, and the third direction D3 is a direction that is orthogonal to the first direction D1 and also follows a vertical plane.

The object 10 includes the side faces 14 that spread from the front face 11 to the rear face 12. The fluid F flows downstream along the side faces 14. The side face that makes up the upper end of the object 10 is also referred to the upper face 13 in particular.

As illustrated in Fig. 27 and Fig. 28, the object 10 includes curved portions 15 that are situated between the front face 11 and the side faces 14. The curved portions 15 are portions at which the normal direction of the surfaces thereof changes in accordance with position. For example, at the boundary portions between the curved portions 15 and the front face 11, the normal direction of the curved portions 15 is parallel to the first direction D1. For example, at the boundary portions between the curved portions 15 and the side faces 14, the normal direction of the curved portions 15 is parallel to the second direction D2. The angle that corresponds to the amount of change in the normal direction of the curved portions 15 will also be referred to as curvature angle of the curved portions 15. In the example illustrated in Fig. 27 and Fig. 28, the curvature angle of the curved portions 15 is 90°.

As illustrated in Fig. 27 and Fig. 28, the object 10 includes the structured body 20 that is attached to the curved portions 15. The structured body 20 is configured to generate vortices to promote mixing of the fluid. Attaching the structured body 20 to each of the curved portions 15 enables separation of the fluid F at the curved portions 15 to be suppressed.

The structured body 20 includes the first face 21 that comes into contact with the fluid F. The first face 21 includes a curved region. The region of the first face 21 that is curved will also be referred to as a curved face. The first face 21 may include a flat region.

In the present embodiment, the structured body 20 has flexibility. Accordingly, the structured body 20 that is attached to the curved portions 15 of the object 10 is deformed in accordance with the form of the curved portions 15. As a result, the curved face is formed in the first face 21 of the structured body 20.

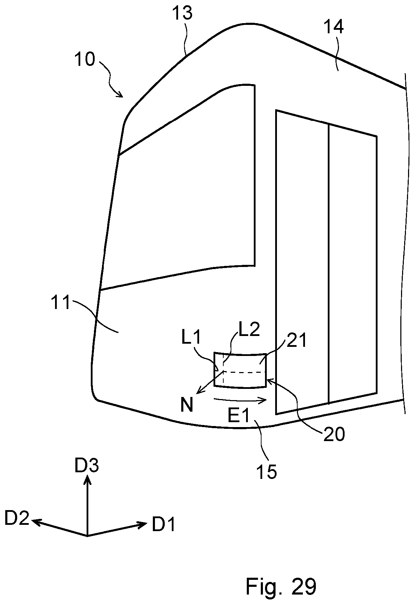

Fig. 29 is a perspective view illustrating an example of the structured body 20 attached to the object 10. The structured body 20 spreads along the planar first direction E1. The planar first direction E1 is a direction of curvature of the curved face of the first face 21. The direction of curvature is a direction along the first face 21, and is a direction in which the rate of change of a normal direction N of the first face 21 is greatest. The rate of change of the normal direction N is the amount of change in a vector that represents the normal direction N when moving by an increment of distance along the first face 21.

For example, in Fig. 29, a line L2 extends in a direction along the first face 21, along a direction parallel to the third direction D3. The amount of change in the normal direction N before and after moving along the line L2 by an increment of distance is zero. Line L1 is a line that extends in a direction orthogonal to line L2, along the first face 21. In a case in which the amount of change of the normal direction N in a case of moving along the line L1 by the increment of distance is greater than the amount of change of the normal direction N in a case of employing various other lines, the direction in which the line L1 extends is defined as the planar first direction E1.

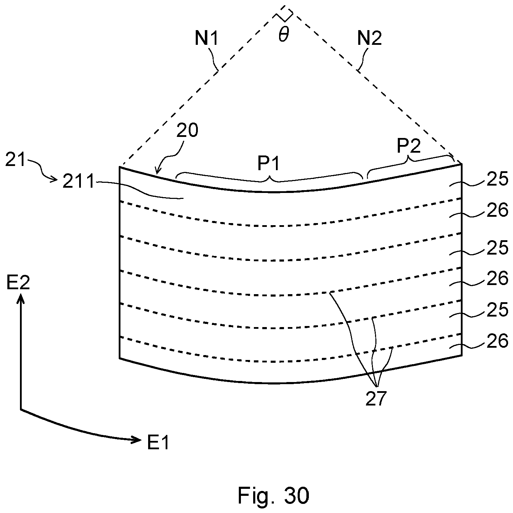

Fig. 30 is a diagram illustrating the structured body 20 in Fig. 29 in an enlarged manner. As illustrated in Fig. 30, the structured body 20 includes the frictional portions 25 and the smooth portions 26 situated on the first face 21. The frictional portions 25 and the smooth portions 26 spread in the planar first direction E1. The smooth portions 26 are adjacent to the frictional portions 25 in the planar second direction E2. The planar second direction E2 is a direction along the first face 21, and is a direction intersecting the planar first direction E1. The planar second direction E2 may be orthogonal to the planar first direction E1. As illustrated in Fig. 30, the plurality of frictional portions 25 and smooth portions 26 may be arrayed alternating along the planar second direction E2.

In Fig. 30, dotted lines denoted by sign 27 represent the boundaries between the frictional portions 25 and the smooth portions 26. Imaginary lines that represent the boundaries are also referred to as boundary lines. The boundary lines 27 may extend in parallel to the planar first direction E1. For example, an angle formed between a direction in which the boundary lines 27 extend and the planar first direction E1 may be a first threshold value TH1 or smaller. The first threshold value TH1 is, for example, 10°, may be 5°, and may be 3°. Vortices generated at the boundaries can be made to be greater by the boundary lines 27 extending in parallel to the planar first direction E1.

As illustrated in Fig. 30, the first face 21 may include a first region P1 and a second region P2 that are adjacently arrayed in the planar first direction E1. The first region P1 includes a curved face 211. The second region P2 is a flat region in comparison with the first region P1. For example, the second region P2 may have a greater radius of curvature as compared to the radius of curvature of the first region P1. The second region P2 may be a flat region. In this case, the second region P2 may be interpreted as a region having a radius of curvature that is infinitely great.

As illustrated in Fig. 30, the curved face 211 may be curved so as to bulge outward. "Bulge outward" means that the curved face 211 is curved so as to protrude in a direction from the object 10 toward the first face 21.

The structured body 20 has a curvature angle θ. The curvature angle θ is an angle formed between two normal lines N1 and N2 as to the first face 21, passing through both ends of the structured body 20 in the planar first direction E1. The curvature angle θ is, for example, 30° or more, may be 45° or more, may be 60° or more, and may be 80° or more. The curvature angle θ is, for example, 170° or less, may be 140° or less, and may be 120° or less.

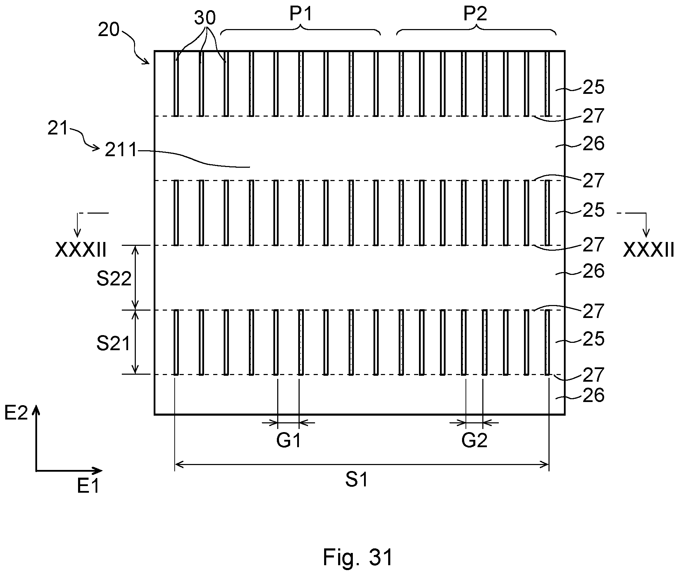

Fig. 31 is a plan view illustrating the structured body 20 on the basis of a coordinate system of the planar first direction E1 and the planar second direction E2. The frictional portions 25 are configured to disturb the flow of the fluid F. For example, resistance that the fluid F receives when the fluid F flows along the frictional portions 25 is greater than resistance that the fluid F receives when the fluid F flows along the smooth portions 26. As a result, flows that deviate from the first direction D1 can be generated at the boundaries between the frictional portions 25 and the smooth portions 26. For example, vortices can be generated in the fluid F at the boundaries between the frictional portions 25 and the smooth portions 26.

As illustrated in Fig. 31, the frictional portions 25 may include the plurality of disturbance structures 30 that disturb the flow of the fluid F. The plurality of disturbance structures 30 may be arrayed in the planar first direction E1. As illustrated in Fig. 31, the disturbance structures 30 may extend along the planar second direction E2 that intersects the planar first direction E1. In this case, the boundary lines 27 may be defined as being lines that pass through end portions of the plurality of disturbance structures 30.

In Fig. 31, sign S1 denotes a dimension of the frictional portions 25 in the planar first direction E1. The dimension S1 will also be referred to as length S1. The length S1 may be set such that a sufficient number of disturbance structures 30 are arrayed in the planar first direction E1. The length S1 is, for example, 5 mm or more, may be 10 mm or more, may be 25 mm or more, may be 30 mm or more, may be 50 mm or more, and may be 100 mm or more. Accordingly, the fluid F flowing along the frictional portions 25 can be repeatedly disturbed by the plurality of disturbance structures 30. Accordingly, mixing of the fluid at the boundary layer between the fluid F and the surface of the object 10 can be promoted. Thus, separation of the fluid can be suppressed.

On the other hand, when the length S1 is excessively great, frictional resistance that the fluid F receives from the structured body 20 increases, and flow of the fluid F is impeded. Giving consideration to this point, the length S1 is, for example, 1000 mm or less, may be 500 mm or less, and may be 300 mm or less.

In a case in which the frictional portions 25 include the disturbance structures 30, the length S1 of the frictional portions 25 is set on the basis of the disturbance structure 30 that is situated farthest upstream in the direction of flow of the fluid F, and the disturbance structure 30 that is situated farthest downstream therein, as illustrated in Fig. 31.

The length of the smooth portions 26 in the planar first direction E1 may be the same as the length S1 of the frictional portions 25, or may be different from the length S1. The numerical value range of the length of the smooth portions 26 may be the same as the above-described numerical value range of the length S1, or may be different.

In Fig. 31, sign S21 denotes the dimension of the frictional portions 25 in the planar second direction E2. The dimension S21 will also be referred to as width S21. The width S21 may be set such that the flow of the fluid F can be sufficiently disturbed by the frictional portions 25. The width S21 is, for example, 0.2 mm or more, may be 1.0 mm or more, and may be 5.0 mm or more.

On the other hand, when the width S21 is excessively great, the ratio of magnitude of vortices generated at the boundaries between the frictional portions 25 and the smooth portions 26, as to the width S21, becomes small. As a result, the proportion of the fluid F that is less readily affected by the vortices increases. Taking this point into consideration, the width S21 is, for example, 50 mm or less, may be 30 mm or less, and may be 20 mm or less.

The width S22 of the smooth portions 26 in the planar second direction E2 may be the same as the width S21 of the frictional portions 25, or may be different from the width S21. The numerical value range of the width S22 of the smooth portions 26 may be the same as the above-described numerical value range of the width S21 of the frictional portions 25, or may be different.

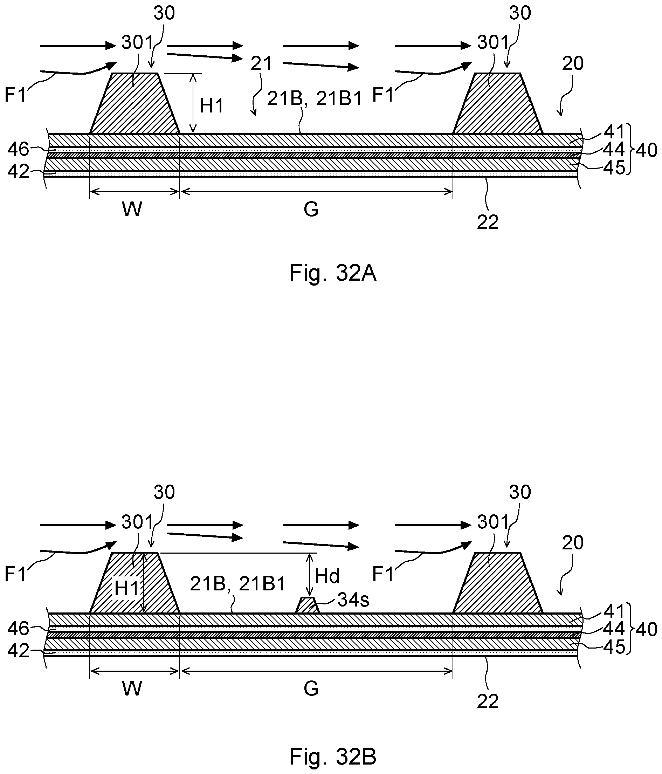

Fig. 32A is a cross-sectional view of the structured body 20 in Fig. 31 as viewed from a XXXII-XXXII direction. The structured body 20 may include the first face 21 and the second face 22. The second face 22 is a face that is situated on an opposite side from the first face 21 in the thickness direction of the structured body 20. The second face 22 may be a flat face.

The first face 21 may include the base face 21B. For example, the structured body 20 may include the base body 40 that includes the base face 21B. The base face 21B is a region that has the greatest occupancy proportion in the first face 21. The base face 21B is distinguished from other regions of the first face 21 on the basis of distance from the second face 22 in the thickness direction of the structured body 20. The occupancy proportion of the base face 21B in the first face 21 is, for example, 50% or more, may be 60% or more, and may be 70% or more.

As illustrated in Fig. 32A, the disturbance structures 30 may protrude out with respect to the base face 21B in the thickness direction of the structured body 20. Such disturbance structures 30 will also be referred to as protrusions 301. The protrusions 301 may have cross-sectional forms that are trapezoidal.

The protrusions 301 have the first height H1 from the base face 21B. The first height H1 is, for example, 1.0 mm or less, may be 600 µm or less, may be 400 µm or less, may be 300 µm or less, and may be 200 µm or less. Making the first height H1 to be small enables frictional resistance that the fluid F receives from the structured body 20 to be reduced. The first height H1 is, for example, 20 µm or more, may be 50 µm or more, and may be 100 µm or more.

In Fig. 32A, sign W denotes a dimension of the disturbance structures 30 in the planar first direction E1. The dimension W may be measured at the position at which the disturbance structure 30 is in contact with the base face 21B. The dimension W may be set by a relation with the first height H1. W/H1, which is the ratio of the dimension W with respect to the first height H1 is, for example, 0.3 or more, may be 0.5 or more, and may be 0.7 or more. W/H1 is, for example, 3.0 or less, may be 2.0 or less, and may be 1.5 or less.

In Fig. 32A, sign G denotes a gap between two disturbance structures 30 that are adjacently arrayed in the planar first direction E1. The gap G may be set by a relation with the first height H1. G/H1, which is the ratio of the gap G with respect to the first height H1 is, for example, 1.0 or more, may be 2.0 or more, and may be 3.0 or more. Thus, fluid F1 that is diverted upward by colliding with the protrusions 301 can be made to collide again with the protrusions 301 on the downstream side, as illustrated in Fig. 32A. Accordingly, the fluid F flowing along the frictional portions 25 can be made to repeatedly collide with the disturbance structures 30. G/H1 is, for example, 12.0 or less, may be 10.0 or less, and may be 8.0 or less. Thus, the frequency of the fluid F colliding with the disturbance structures 30 can be sufficiently increased. Accordingly, mixing of the fluid F at the boundary layer between the fluid F and the surface of the object 10 can be promoted. Hence, separation of the fluid can be suppressed.

As described above, the fluid F1 that is diverted upward by colliding with protrusions 301 on the upstream side preferably collides again with protrusions 301 on the downstream side. The base face 21B situated between two protrusions 301 adjacently arrayed in the planar first direction E1 is also referred to as the valley region. In order for the fluid F1 to collide again with the protrusion 301 on the downstream side, preferably, no large projection is disposed in the valley region 21B1. According to this configuration, the valley region 21B1 can be suppressed from disturbing the flow of the fluid F1. The gap G described above is equivalent to the dimension of the valley region 21B1 in the planar first direction E1.

Fig. 32B is a cross-sectional view of a modification of the structured body 20. The small projection 34s may be disposed on the base face 21B that is situated between two protrusions 301 adjacently arrayed in the planar first direction E1. The flow of the fluid F1 is hardly disturbed at all by the small projection 34s, as long as the height of the small projection 34s is small. Accordingly, the fluid F1 that has collided with the protrusion 301 on the upstream side can be made to collide again with the protrusion 301 on the downstream side.

In Fig. 32B, sign Hd denotes a distance from an apex of the protrusions 301 to the apex of the small projection 34s, in the normal direction of the base face 21B. A range of the distance Hd that is desirable may be set relatively with respect to the first height H1 of the protrusions 301. Hd/H1, which is a ratio of the distance Hd with respect to the first height H1 is, for example, 0.90 or more, and may be 0.95 or more. Hd/H1, which is the ratio of the distance Hd with respect to the first height H1 is, for example, 0.99 or less, and may be 0.98 or less.

The formation method of the disturbance structures 30 is not limited in particular. For example, the disturbance structures 30 may be formed by forming a resin layer on the base face 21B of the base body 40, and thereafter processing the resin layer using a die or the like, such as a contour roll or the like. In a case in which the disturbance structures 30 are the protrusions 301, the protrusions 301 may be formed by selectively applying the material to make up the protrusions 301 on the base face 21B by the inkjet method or the like. The disturbance structures 30 may be subjected to curing processing following implementation of a process to set the form of the disturbance structures 30 such as the protrusions 301 or the like. For example, in a case in which the material of the disturbance structures 30 is UV-curable, the disturbance structures 30 may be irradiated by UV rays.

Although not illustrated, the disturbance structures 30 may be integrally formed with the first base material 41. "Integrally" means that there is no interface present between the disturbance structures 30 and the first base material 41.

For example, first, the first base material 41 that has a greater thickness than the first height H1 may be prepared, and next, the first base material 41 may be processed by using a contour roll or the like. Thus, the disturbance structures 30 that are integral with the first base material 41 are obtained.

For example, first, a die is prepared. Next, a raw material having fluidity is poured into the die. The raw material may contain resin. The raw material may contain resin and a solvent. Subsequently, the raw material is cured in the die. For example, the solvent is evaporated by heating the raw material. Thus, the structured body 20 is formed within the die. Subsequently, the structured body 20 is removed from the die. Thus, the disturbance structures 30 that are integral with the first base material 41 are obtained.

The manufacturing process of the structured body 20 may include a process that is carried out while transporting the base body 40 in a particular direction. For example, a coating process in which the base face 21B is selectively coated over with a material of which the protrusions 301 are configured, by the inkjet method or the like, may be carried out while transporting the base body 40 in an MD direction. For example, a process of irradiation the disturbance structures 30 by UV rays may be carried out while transporting the base body 40 in the MD direction. The MD direction is an abbreviation of machine direction. The MD direction is a direction in which the base body 40 is transported in the manufacturing process of the structured body 20. A TD direction, which will be described later, is an abbreviation of transverse direction. The TD direction is orthogonal to the MD direction.

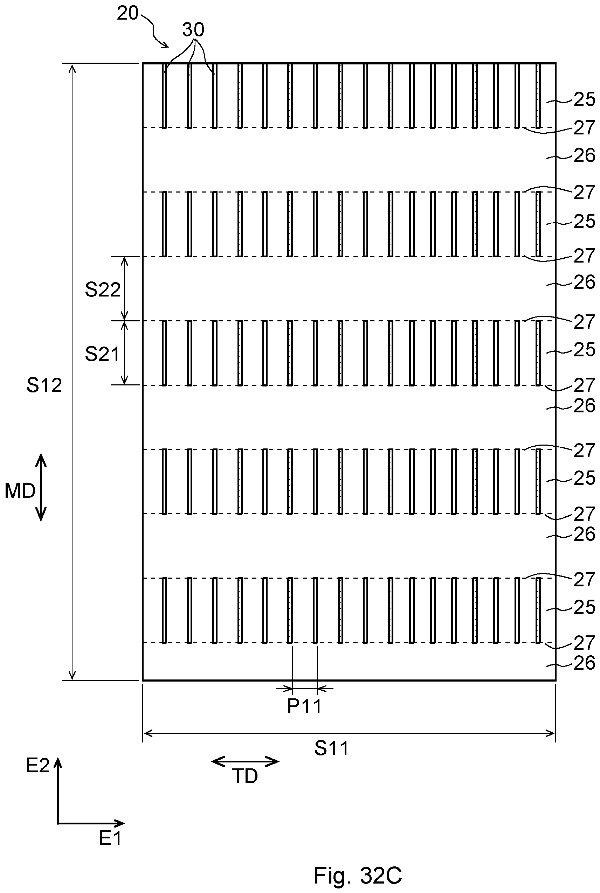

Fig. 32C is a plan view illustrating a relation between the MD direction and the TD direction of the structured body 20, and the planar first direction E1 and the planar second direction E2 of the object 10. The TD direction of the structured body 20 may be parallel to the planar first direction E1 of the object 10. For example, an angle formed between the TD direction and the planar first direction E1 may be the first threshold value TH1 described above or smaller.

The MD direction of the structured body 20 may be parallel to the planar second direction E2 of the object 10. For example, an angle formed between the MD direction and the planar second direction E2 may be the first threshold value TH1 described above or smaller.

The structured body 20 may be configured such that a tensile modulus of elasticity of the structured body 20 in the TD direction is greater than a tensile modulus of elasticity of the structured body 20 in the MD direction. For example, the first base material 41 or the second base material 45 of the base body 40 of the structured body 20 may be a drawn plastic film that is drawn in the MD direction. The first base material 41 may be a uniaxially drawn plastic film that is drawn in the MD direction, or may be a biaxially drawn plastic film that is drawn in the MD direction and the TD direction. The biaxially drawn plastic film may be configured such that the tensile modulus of elasticity thereof in the MD direction is greater than the tensile modulus of elasticity thereof in the TD direction.

The tensile modulus of elasticity of the structured body 20 is measured at 23 ±2°C, conforming to JIS K 7161-1:2014. A test piece is obtained by cutting out the structured body 20 to a rectangle that is 25 mm wide and 150 mm long. Spacing between a pair of chucks holding the test piece is 75 mm at the time of starting the test, and pulling speed is 50 mm/minute. Gauge length is 75 mm. Rated capacity of the load cell that is used is 1 kN. An averaged value of measurement values of three test pieces is used as the tensile modulus of elasticity in the present application.

When measuring the tensile modulus of elasticity of the structured body 20 in the MD direction, the test pieces are cut out from the structured body 20 such that a long direction of the test pieces is in parallel to the MD direction. When measuring the tensile modulus of elasticity of the structured body 20 in the TD direction, the test pieces are cut out from the structured body 20 such that the long direction of the test pieces is in parallel to the TD direction.

A tensile modulus of elasticity TE1 of the structured body 20 in the MD direction is, for example, 22 MPa or more, may be 25 MPa or more, and may be 28 MPa or more. The tensile modulus of elasticity TE1 of the structured body 20 in the MD direction is, for example, 60 MPa or less, may be 50 MPa or less, and may be 45 MPa or less.

A tensile modulus of elasticity TE2 of the structured body 20 in the TD direction is, for example, 15 MPa or more, may be 18 MPa or more, and may be 20 MPa or more. The tensile modulus of elasticity TE2 of the structured body 20 in the TD direction is, for example, 28 MPa or less, may be 25 MPa or less, and may be 22 MPa or less.

TE1/TE2, which is the ratio of the tensile modulus of elasticity TE1 in the MD direction as to the tensile modulus of elasticity TE2 in the TD direction is, for example, 1.10 or more, may be 1.30 or more, and may be 1.50 or more. TE1/TE2 is, for example, 2.50 or less, may be 2.30 or less, and may be 2.00 or less.

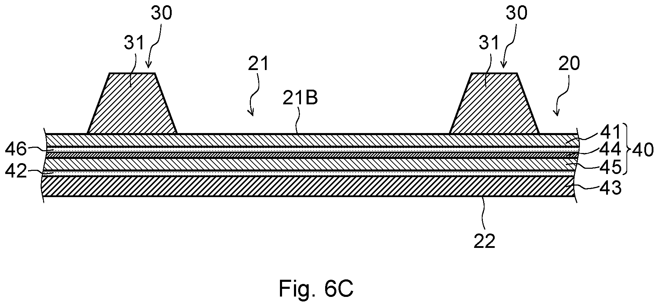

The structured body 20 in a state prior to being attached to the object 10 may include the separator 43 that is in contact with the adhesive layer 42, in the same way as the case of the first embodiment illustrated in Fig. 6C. The structured body 20 may be distributed in a state with the separator 43 included therein. In a process of attaching the structured body 20 to the object 10, the separator 43 is removed, and thereafter the structured body 20 is attached to the object 10.

Next, returning to Fig. 31, the gap G between two disturbance structures 30 will be described. The gap G does not have to be constant at each position in the planar first direction E1. For example, the gap G may be different in accordance with the position in the planar first direction E1. For example, as illustrated in Fig. 31, a gap G1 between the disturbance structures 30 in the first region P1 may be greater than a gap G2 between the disturbance structures 30 in the second region P2. As described above, the first region P1 is a region of the first face 21 including the curved face 211. The second region P2 is a region of the first face 21 that is flat as compared to the first region P1.

The smaller the radius of curvature of the curved face 211 is, the less readily the fluid F1 diverted upward by colliding with the protrusions 301 collides with the protrusions 301 on the downstream side. Making the gap G1 between the disturbance structures 30 in the first region P1 to be greater enables the fluid F1 to be made to repeatedly collide with the disturbance structures 30 on the curved face 211 as well. G1/G2, which is the ratio of the gap G1 as to the gap G2 is, for example, 1.01 or more, may be 1.03 or more, may be 1.05 or more, and may be 1.10 or more.

Positions, forms, and so forth, of components on the first face 21 of the structured body 20 in a state of being attached to the object 10, are measured by using a laser displacement sensor. The above-described planar first direction E1, curvature angle θ, length S1, width S21, width S22, first height H1, gap G, and so forth, are calculated on the basis of the measurement results.

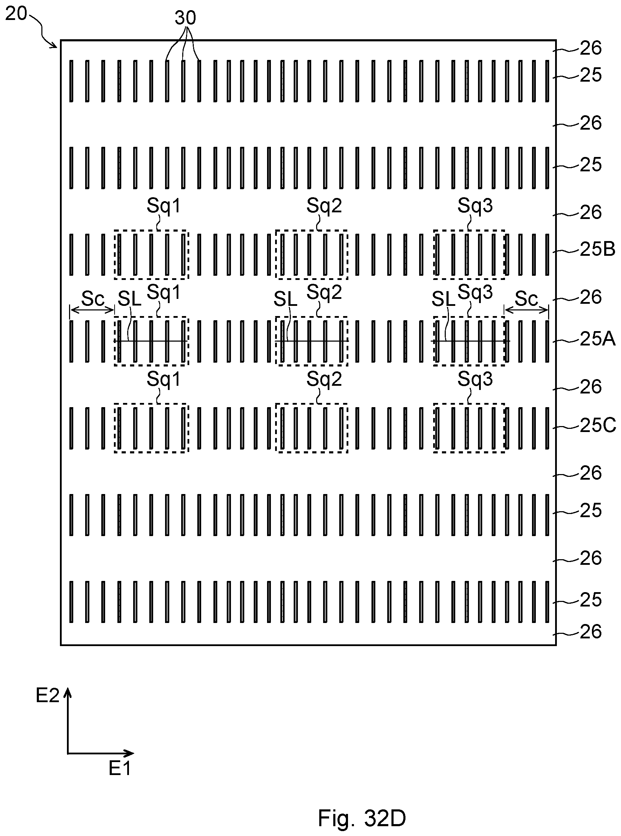

Fig. 32D is a diagram for describing a method for measuring the first height H1 and gap G of the disturbance structures 30 in the frictional portions 25. This measurement method is used in the first embodiment described above, as well.

In a case in which the structured body 20 includes three or more frictional portions 25, a value obtained by averaging measurement values in nine measurement regions is used for the first height H1 and gap G of the present application. The nine measurement regions are situated in frictional portions 25A, 25B, and 25C, as illustrated in Fig. 32D. The frictional portion 25A is situated at the middle of the structured body 20 in the planar second direction E2. The frictional portion 25B and the frictional portion 25C are situated adjacent to the frictional portion 25A in the planar second direction E2.

The frictional portion 25A includes a first test region Sq1, a second test region Sq2, and a third test region Sq3. The first test region Sq1 is situated a distance Sc in the planar first direction E1 away from an end of the frictional portion 25A on the upstream side in the planar first direction E1. The third test region Sq3 is situated the distance Sc in the planar first direction E1 away from an end of the frictional portion 25A on the downstream side in the planar first direction E1. The distance Sc is set relatively with respect to the length S1 of the frictional portion 25A. Specifically, the distance Sc is 0.1 × S1. The second test region Sq2 is situated at the middle of the frictional portion 25A in the planar first direction E1. Each of the first test region Sq1, the second test region Sq2, and the third test region Sq3 includes five disturbance structures 30 arrayed in the planar first direction E1. Accordingly, 15 disturbance structures 30 are measured in one frictional portion 25A. In a case in which the number of the disturbance structures 30 included in one frictional portion 25A is less than 15, all disturbance structures 30 are measured.

As illustrated in Fig. 32D, in the first test region Sq1, measurement is performed along one scan line SL that is situated at the middle of the first test region Sq1 in the planar second direction E2, and that is parallel to the planar first direction E1. The one scan line SL spans five disturbance structures 30 arrayed in the planar first direction E1. Average values of the first height H1 and the gap G measured along the one scan line SL are the measurement values of the first height H1 and the gap G in the first test region Sq1.

In the second test region Sq2 and the third test region Sq3 as well, measurement is performed along one scan line SL that is parallel to the planar first direction E1, in the same way as the first test region Sq1.

In the same way as the frictional portion 25A, the frictional portion 25B also includes the first test region Sq1, the second test region Sq2, and the third test region Sq3. Measurement is performed along one scan line SL that is parallel to the planar first direction E1 in the first test region Sq1, second test region Sq2, and third test region Sq3 of the frictional portion 25B, the same as with the frictional portion 25A. In the same way as the frictional portion 25A, the frictional portion 25C also includes the first test region Sq1, the second test region Sq2, and the third test region Sq3. Measurement is also performed along one scan line SL that is parallel to the planar first direction E1 in the first test region Sq1, the second test region Sq2, and the third test region Sq3 of the frictional portion 25C, the same as with the frictional portion 25A. Averaged values of the measurement values of the nine measurement regions situated in the frictional portions 25A, 25B, and 25C are used as the first height H1 and gap G in the present application.

Although not illustrated, in a case in which the structured body 20 includes two frictional portions 25, test regions are set in the two frictional portions 25. The two frictional portions 25 each include the first test region Sq1, the second test region Sq2, and the third test region Sq3. Accordingly, in a case in which the structured body 20 includes two frictional portions 25, measurement is performed at six test regions. Averaged values of the measurement values of the six test regions are used as the first height H1 and gap G in the present application.

Although not illustrated, in a case in which the structured body 20 includes one frictional portion 25, which will be described later, test regions are set in the one frictional portion 25. The one frictional portion 25 includes the first test region Sq1, the second test region Sq2, and the third test region Sq3. Accordingly, in a case in which the structured body 20 includes one frictional portion 25, measurement is performed at three test regions. Values obtained by averaging measurement values of the three test regions are used as the first height H1 and gap G in the present application.

Next, the smooth portions 26 will be described. The smooth portions 26 may include the base face 21B described above. The occupancy proportion of the base face 21B in the frictional portions 25 is referred to as the first base proportion R1. The occupancy proportion of the base face 21B in the smooth portions 26 is referred to as the second base proportion R2. The second base proportion R2 is greater than the first base proportion R1. The second base proportion R2 is, for example, 70% or more, may be 80% or more, may be 90% or more, may be 95% or more, may be 99% or more, and may be 100%.

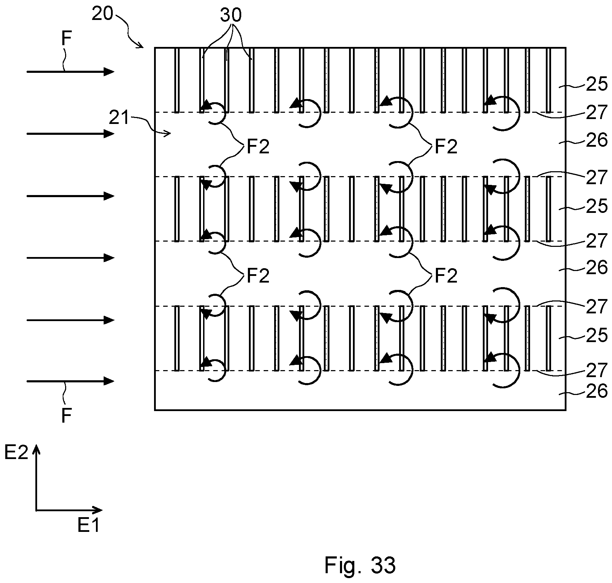

Fig. 33 is a plan view illustrating an example of vortices generated in the structured body 20. The frictional portions 25 and the smooth portions 26 spread in the planar first direction E1. Accordingly, as illustrated in Fig. 33, vortices F2 of the fluid can be generated along the boundary lines 27 between the frictional portions 25 and the smooth portions 26. Thus, separation of the fluid F can be suppressed. As illustrated in Fig. 33, the energy of the vortices F2 may increase the farther downstream. Thus, separation of the fluid F can be further suppressed.

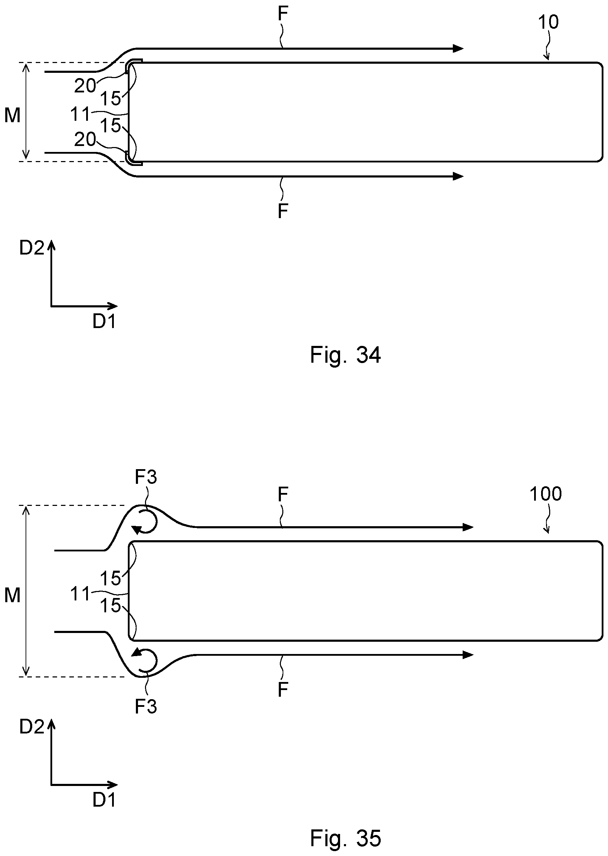

Fig. 34 is a diagram illustrating an example of the way in which the fluid F flows along the surface of the object 10 including the structured body 20. In the example illustrated in Fig. 34, structured bodies 20 are attached to curved portions 15 between the front face 11 and the side faces 14. Accordingly, the fluid F can be suppressed from separating at the curved portions 15. Thus, difference between pressure that the object 10 receives from the fluid F at the upstream side of the structured body 20 and pressure that the object 10 receives from the fluid at the downstream side of the structured body 20 can be suppressed from being generated. Accordingly, pressure resistance that the object 10 receives from the fluid F can be reduced.

Fig. 35 is a diagram illustrating an example of the way in which the fluid F flows along the surface of the object 100 according to a comparative form. The object 100 according to the comparative form does not include the structured body 20. Accordingly, it is thought that the fluid F separates from the object 100 at the curved portions 15, and dead water regions F3 are generated between the fluid F and the object 100. As a result, a dimension M of a forward-projection area of the object 100 with respect to the fluid F increases by an amount corresponding to the dead water regions F3. Accordingly, the pressure resistance that the object 100 receives from the fluid F increases.

Conversely, in the present embodiment, the structured bodies 20 can suppress the fluid F from separating at the curved portions 15. Accordingly, the dimension M of the forward-projection area can be reduced as compared to the case of the comparative form, as illustrated in Fig. 34. Thus, pressure resistance that the object 10 receives from the fluid F can be reduced.

The second embodiment that is described above can be changed variously. Other embodiments thereof will be described below, with reference to the drawings as necessary. In the description below, and in the drawings used for description below, portions that can be configured in the same way as those in the second embodiment described above will be denoted by signs that are the same signs used to denote corresponding portions in the second embodiment described above. Repetitive description will be omitted. Also, in cases in which advantageous effects that are obtained in the second embodiment described above can clearly be obtained in another embodiment as well, description thereof may be omitted in some cases.

### (First Modification)

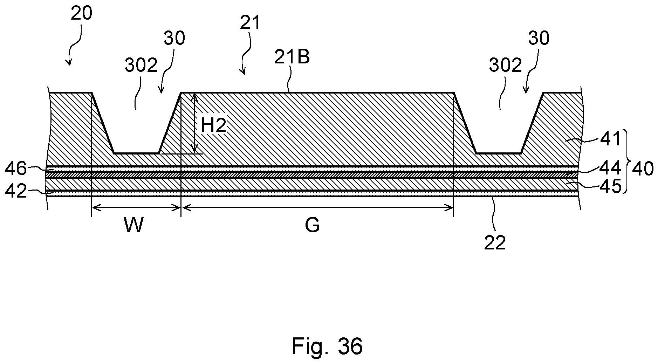

Fig. 36 is a cross-sectional view illustrating the structured body 20 according to a first modification. As illustrated in Fig. 36, the disturbance structures 30 may be recessed with respect to the base face 21B in the thickness direction of the structured body 20. Such a disturbance structures 30 are also referred to as recesses 302. Using the recesses 302 enables increase in the frictional resistance due to the structured body 20 to be suppressed. Also, damage to the disturbance structures 30 can be suppressed as compared with a case of using the protrusions 301.

The recesses 302 have a second depth H2 from the base face 21B. The second depth H2 is, for example, 400 µm or less, may be 300 µm or less, and may be 200 µm or less. Making the second depth H2 to be small enables frictional resistance that the fluid F receives from the structured body 20 to be reduced. The second depth H2 is, for example, 20 µm or more, may be 50 µm or more, and may be 100 µm or more.

### (Second Modification)

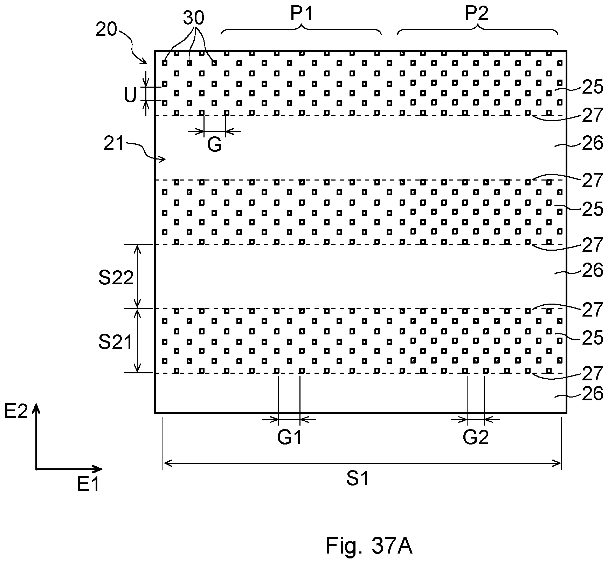

Fig. 37A is a plan view illustrating the structured body 20 according to a second modification. As illustrated in Fig. 37A, one frictional portion 25 may include a plurality of the disturbance structures 30 arrayed in the planar second direction E2. A gap U between two disturbance structures 30 that are adjacently arrayed in the planar second direction E2 may be, for example, 5.0 mm or less, may be 3.0 mm or less, may be 1.0 mm or less, may be 0.5 mm or less, and may be 0.1 mm or less. The disturbance structures 30 are, for example, protrusions 301. According to the example illustrated in Fig. 37A, foreign matter such as debris or the like can pass between two disturbance structures 30 that are adjacently arrayed in the planar second direction E2. Accordingly, the frictional portion 25 can be kept from becoming clogged with foreign matter.

The disturbance structures 30 may be recesses 302.

The dimension U may be set by a relation with the width S22 of the smooth portions 26. U/S22, which is the ratio of the dimension U with respect to the width S22 is, for example, 1/5 or less, may be 1/10 or less, and may be 1/20 or less.

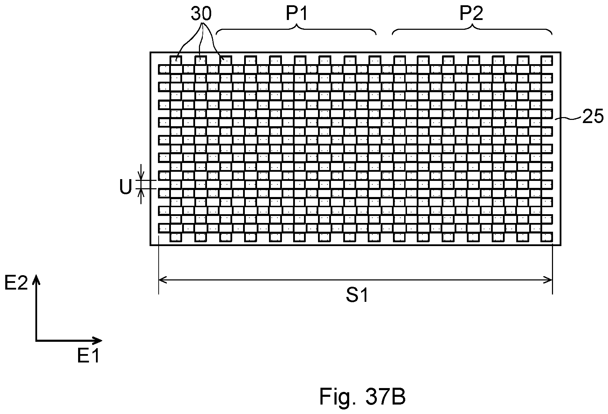

Fig. 37B is a plan view illustrating an example of the frictional portion 25 according to the second modification. A plurality of the disturbance structures 30 may be disposed such that the gap U between two disturbance structures 30 adjacently arrayed in the planar second direction E2 is filled in by another one disturbance structure 30 as viewed in the planar first direction E1. The positions of the two disturbance structures 30 in the planar first direction E1 and the position of the other one disturbance structure 30 in the planar first direction E1 are different.

### (Third Modification)

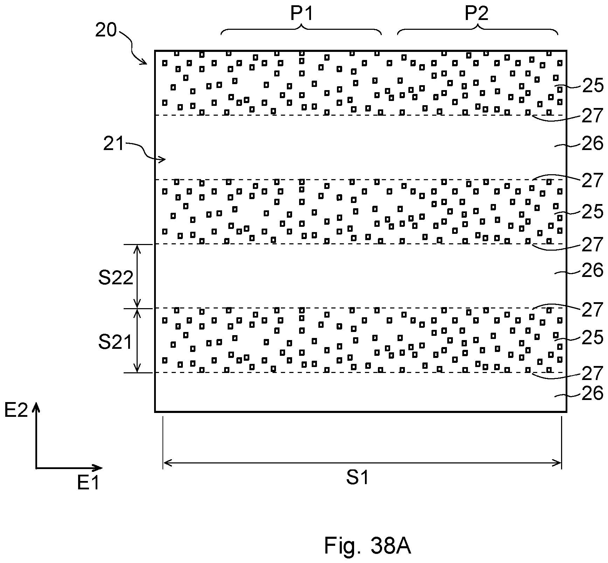

Fig. 38A is a plan view illustrating the structured body 20 according to a third modification. The frictional portions 25 and the smooth portions 26 may be distinguished on the basis of arithmetic mean height and maximal height. The frictional portions 25 have a first arithmetic mean height Sa1 and a first maximal height Sz1. The smooth portions 26 have a second arithmetic mean height Sa2 and a second maximal height Sz2. The arithmetic mean heights and the maximal heights are measured by a laser microscope confirming to ISO 25178.

The first arithmetic mean height Sa1 is greater than the second arithmetic mean height Sa2. Sa1/Sa2, which is the ratio of the first arithmetic mean height Sa1 with respect to second arithmetic mean height Sa2 is, for example, 2.0 or more, may be 3.0 or more, may be 5.0 or more, and may be 10.0 or more. The first arithmetic mean height Sa1 is, for example, 1.0 µm or more, may be 2.0 µm or more, and may be 5.0 µm or more. The first arithmetic mean height Sa1 is, for example, 200 µm or less, may be 150 µm or less, and may be 100 µm or less.

The first maximal height Sz1 is greater than the second maximal height Sz2. Sz1/Sz2, which is the ratio of the first maximal height Sz1 with respect to the second maximal height Sz2 is, for example, 2.0 or more, may be 3.0 or more, may be 5.0 or more, and may be 10.0 or more. The first maximal height Sz1 is, for example, 20 µm or more, may be 40 µm or more, and may be 80 µm or more. The first maximal height Sz1 is, for example, 400 µm or less, may be 300 µm or less, and may be 200 µm or less.

Sz1/Sa1, which is the ratio of the first maximal height Sz1 with respect to the first arithmetic mean height Sa1 may be, for example, 5 or more, may be 6 or more, and may be 7 or more. Sz1/Sa1 may be, for example, 15 or less, may be 12 or less, and may be 10 or less. The resistance that the frictional portions 25 place on the fluid F can be increased by Sz1/Sa1 being within this range. Accordingly, the effect of reducing the pressure resistance that the object 10 receives from the fluid F can be further improved.

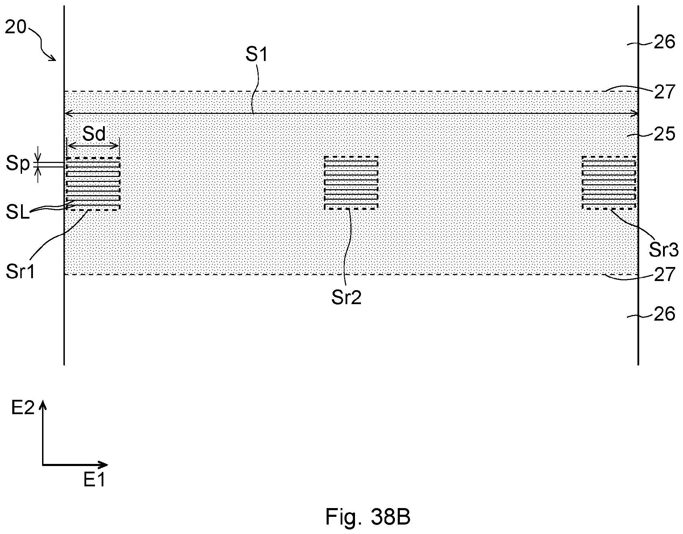

Fig. 38B is a diagram for describing a method of measuring the first arithmetic mean height and the first maximal height in a case in which the structured body 20 only has one frictional portion 25. The first arithmetic mean height and the first maximal height are measured in a state in which the structured body 20 is placed on a level face. The structured body 20 that is used in a state of being attached to the object 10, is peeled off from the object 10 before being measured.

Averaged values of measurement values of three test regions are used as the first arithmetic mean height and the first maximal height in the present application. As illustrated in Fig. 38B, the three test regions include a first test region Sr1, a second test region Sr2, and a third test region Sr3. The first test region Sr1 is situated at the edge of the frictional portion 25 on the upstream side in the planar first direction E1. The third test region Sr3 is situated at the edge of the frictional portion 25 on the downstream side in the planar first direction E1. The second test region Sr2 is situated at the middle of the frictional portion 25 in the planar first direction E1. The first test region Sr1, the second test region Sr2, and the third test region Sr3 are each situated at the middle of the frictional portion 25 in the planar second direction E2.

In a case in which the structured body 20 includes a plurality of the frictional portions 25 arrayed in the planar second direction E2, the first arithmetic mean height and the first maximal height are measured at the frictional portion 25 that is closest to the middle of the structured body 20 in the planar second direction E2.

As illustrated in Fig. 38B, measurement is performed in the first test region Sr1 along ten scan lines SL that are parallel to the planar first direction E1. The ten scan lines SL are arrayed in the planar second direction E2 at equal intervals. A gap Sp between two scan lines SL that are adjacently arrayed is 0.2 mm. A length Sd of the scan lines SL is also referred to as evaluation length. The length Sd is set in a relative manner with respect to the length S1 of the frictional portion 25. Specifically, the length Sd of the scan lines SL is 0.1 × S1. The first arithmetic mean height and the first maximal height measured along ten scan lines SL are the measurement values of the first arithmetic mean height and the first maximal height in the first test region Sr1.

Measurement is performed following the ten scan lines SL parallel to the planar first direction E1 for the second test region Sr2 and the third test region Sr3 as well, in the same way as with the first test region Sr1.

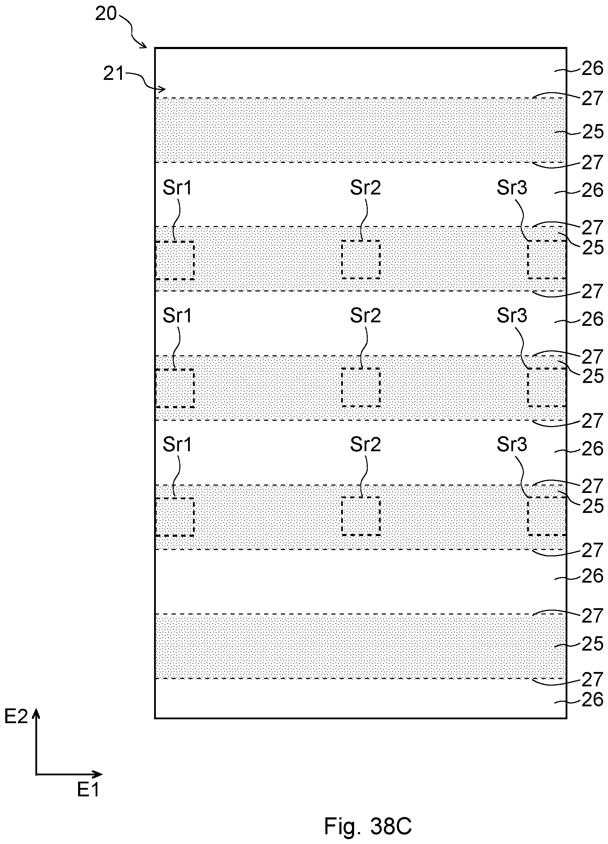

Fig. 38C is a diagram for describing a method of measuring the first arithmetic mean height and the first maximal height in a case in which the structured body 20 includes three or more frictional portions 25. As illustrated in Fig. 38C, test regions are set in three frictional portions 25 that are situated at the middle in the planar second direction E2. The three frictional portions 25 each include the first test region Sr1, the second test region Sr2, and the third test region Sr3, in the same way as the example in Fig. 38B. Accordingly, in the example illustrated in Fig. 38C, measurement is performed in nine test regions. Averaged values of the measurement values in the nine test regions are used as the first arithmetic mean height and the first maximal height according to the present application.

Although not illustrated, in a case in which the structured body 20 includes two frictional portions 25, the test regions are set in the two frictional portions 25. The two frictional portions 25 each include the first test region Sr1, the second test region Sr2, and the third test region Sr3. Accordingly, in a case in which the structured body 20 includes two frictional portions 25, measurement is performed in six test regions. Averaged values of the measurement values in the six test regions are used as the first arithmetic mean height and the first maximal height according to the present application.

### (Fourth Modification)

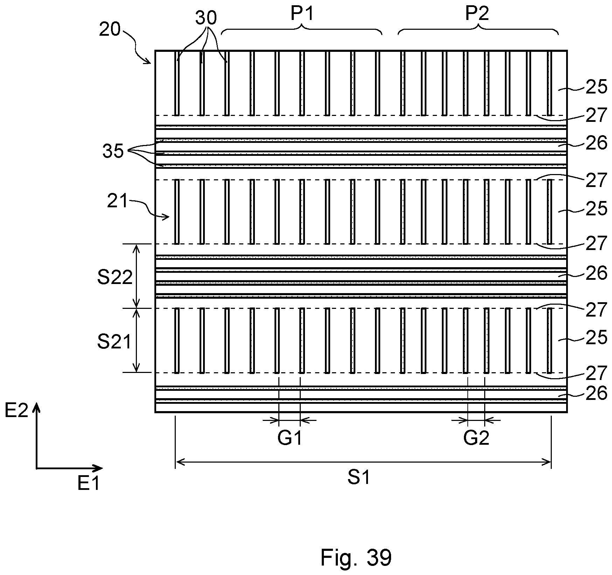

Fig. 39 is a plan view illustrating the structured body 20 according to a fourth modification. As illustrated in Fig. 39, the smooth portions 26 may include a flow-rectifying structure 35 extending in the planar first direction E1. The flow-rectifying structure 35 performs flow rectification of the fluid F, such that the fluid F flows along the planar first direction E1. The flow-rectifying structure 35 is, for example, a groove that extends along the planar first direction E1. Providing the flow-rectifying structure 35 enables resistance that the smooth portion 26 exerts on the fluid F to be reduced. One smooth portion 26 may include a plurality of the flow-rectifying structures 35 arrayed in the planar second direction E2, as illustrated in Fig. 39.

### (Fifth Modification)

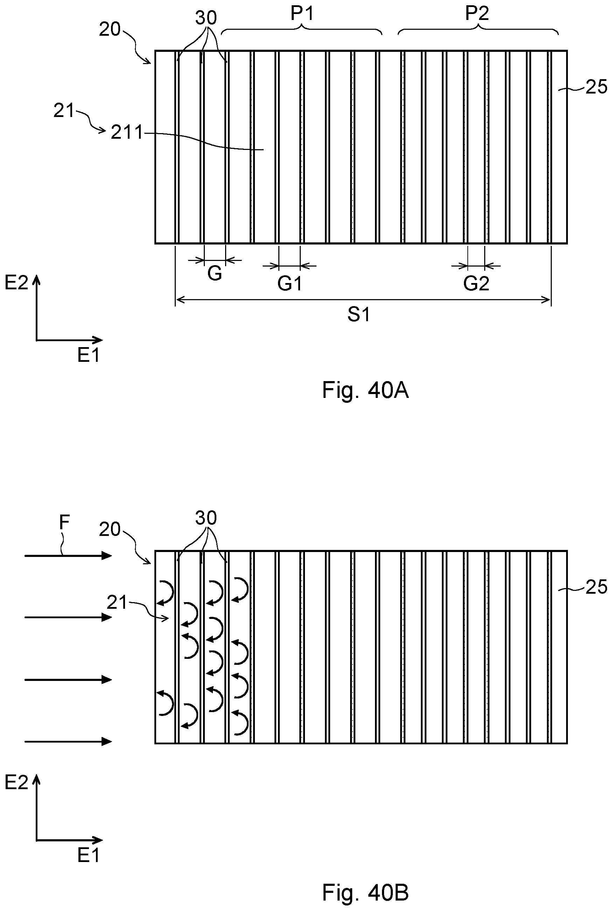

Fig. 40A is a plan view illustrating the structured body 20 according to a fifth modification. The structured body 20 includes the frictional portion 25, but does not have to include the smooth portions 26. As illustrated in Fig. 40A, for example, the frictional portion 25 may spread over the entire region of the structured body 20 in the planar second direction E2.

In the same way as in the above-described embodiments, the frictional portion 25 may be configured to disturb the flow of the fluid F. For example, the frictional portion 25 may include the disturbance structures 30. The disturbance structures 30 may extend continuously from a first end portion of the structured body 20 in the planar second direction E2, to a second end portion of the structured body 20 that is situated on the opposite side from the first end portion in the planar second direction E2. As illustrated in Fig. 40A for example, the disturbance structures 30 may extend continuously in a direction orthogonal to the planar first direction E1.

The disturbance structures 30 may include the protrusions 301. The structure of the protrusions 301 described in the above-described embodiment can be employed in the present modification as well.

Fig. 40B is a plan view illustrating an example of vortices generated in the structured body 20 in Fig. 40A. The protrusions 301 of the disturbance structures 30 in the frictional portion 25 extend in a direction intersecting the planar first direction E1. For example, the protrusions 301 of the disturbance structures 30 extend in the direction orthogonal to the planar first direction E1. Thus, the fluid F1 collides with the protrusions 301 of the disturbance structures 30, and the vortices F2 are generated in the fluid. Accordingly, the fluid F can be suppressed from separating. Thus, difference between pressure that the object 10 receives from the fluid F at the upstream side of the structured body 20 and pressure that the object 10 receives from the fluid at the downstream side of the structured body 20 can be suppressed from being generated. Accordingly, pressure resistance that the object 10 receives from the fluid F can be reduced.

The disturbance structures 30 may include the recesses 302. In this case as well, the disturbance structures 30 can generate the vortices F2 in the fluid. Thus, separation of the fluid F can be suppressed. The structure of the recesses 302 described in the above-described first modification can be employed in the present modification as well.

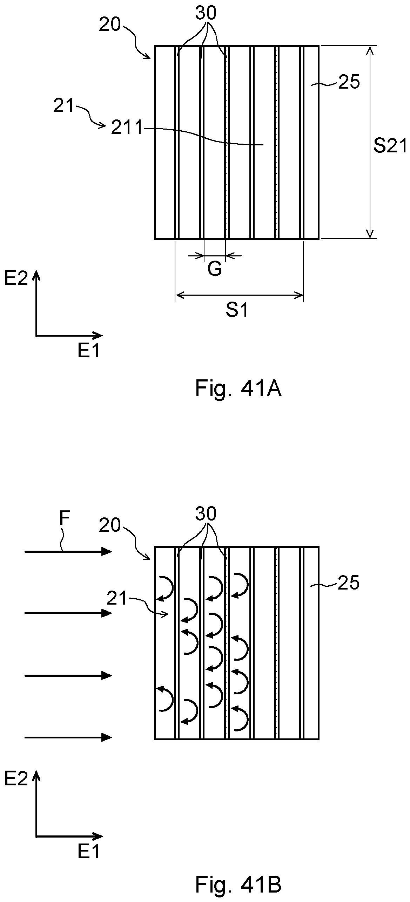

The width S21 of the frictional portion 25 may be greater than the length S1 of the frictional portion 25, as illustrated in Fig. 41A. In other words, the length S1 of the frictional portion 25 may be smaller than the width S21 of the frictional portion 25. In a case in which the structured body 20 has a form of being applied to the object 10, the efficiency of work for application thereof can be improved by reducing the length S1 of the frictional portion 25.

Fig. 41B is a plan view illustrating an example of vortices generated in the structured body 20 in Fig. 41A. In the structured body 20 illustrated in Fig. 41A and Fig. 41B as well, the fluid F1 collides with the protrusions 301 of the disturbance structures 30, and the vortices F2 are generated in the fluid. Accordingly, the fluid F can be suppressed from separating.

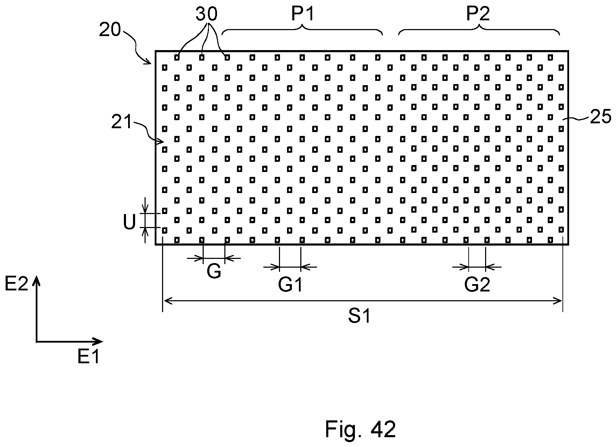

As illustrated in Fig. 42, the frictional portion 25 may include a plurality of the disturbance structures 30 arrayed in the planar second direction E2. In this case as well, the vortices F2 can be generated in the fluid. Thus, separation of the fluid F can be suppressed. In the present modification as well, the structure of the disturbance structures 30 described in the above-described second modification, illustrated in Fig. 37A and Fig. 37B, can be employed.

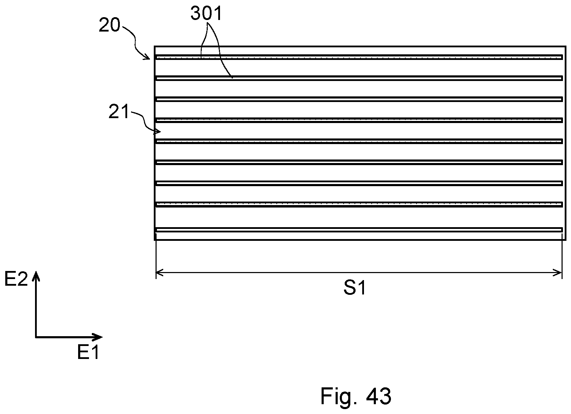

As illustrated in Fig. 43, the structured body 20 may include the protrusions 301 extending continuously following the planar first direction E1. In this case, the protrusions 301 rectify the fluid F such that the fluid F flows following the planar first direction E1. Although not illustrated, the frictional portions 25 may include the recesses 302 extending continuously following the planar first direction E1. The structured body 20 illustrated in Fig. 43 can reduce frictional resistance that the fluid F receives from the structured body 20. Accordingly, the resistance that the fluid F receives from the object 10 can be reduced as compared to a case in which the structured body 20 is not provided to the object 10.

### (Sixth Modification)

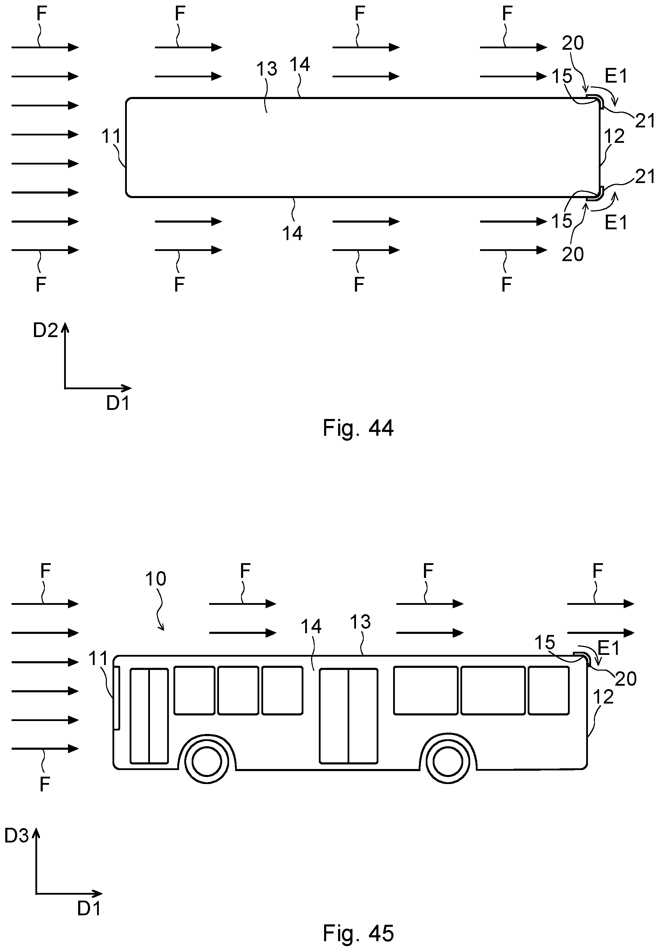

Fig. 44 is a plan view illustrating a modification of the object 10. As illustrated in Fig. 44, the structured body 20 may be attached to the curved portions 15 situated between the rear face 12 and the side faces 14. Accordingly, separation of the fluid F at the curved portions 15 at the rear can be suppressed. For example, the separation point can be made to be situated farther downstream as compared to a case in which the structured body 20 is not provided. The separation point is a position at which separation of the fluid F from the object 10 occurs.

### (Seventh Modification)

Fig. 45 is a plan view illustrating a modification of the object 10. The structured body 20 may be attached to a curved portion 15 adjacent to the upper face 13. As illustrated in Fig. 45 for example, the structured body 20 may be attached to the curved portion 15 that is situated between the rear face 12 and the upper face 13. Accordingly, separation of the fluid F at the curved portion 15 adjacent to the upper face 13 can be suppressed.

### (Eighth Modification)

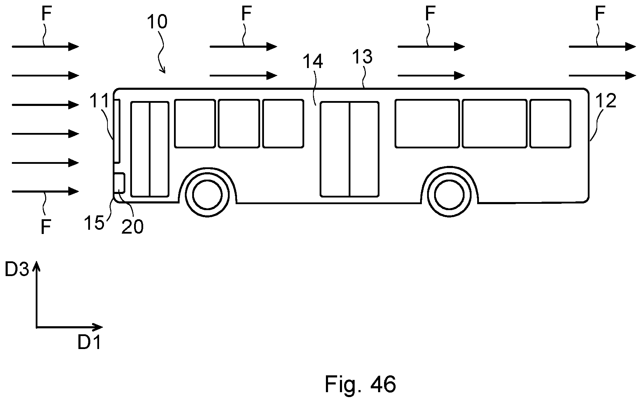

In the embodiment described above, an example has been given in which the structured body 20 is attached to the curved portion 15 of the object 10. However, the relation between the structured body 20 and the object 10 is not restricted in particular. For example, as illustrated in Fig. 46, the structured body 20 may be a component that is included in the object 10 at the time of distribution of the object 10. For example, the structured body 20 may be a component making up the curved portion 15 of the object 10. For example, in a case in which the object 10 is an automobile, the structured body 20 may be one component making up the object 10, such as a door visor or the like. In other words, one component making up the object 10 may include features of the structured body 20, such as the curved face 211, the frictional portions 25, the smooth portions 26, and so forth. In this case, the structured body 20 may be a molded article that is fabricated by injection molding of resin, for example.

### (Ninth Modification)

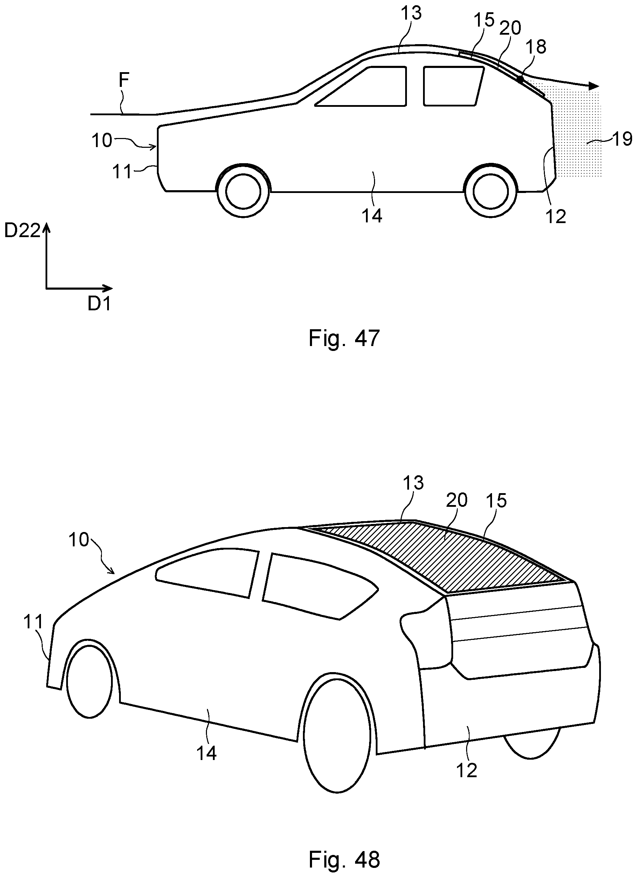

An example in which the object 10 including the structured body 20 is a large-size vehicle such as a bus is given in the above-described embodiment and modifications. However, the size of the object 10 is not limited in particular, as long as the object 10 is in contact with the fluid F. The object 10 may be an automobile, as illustrated in Fig. 47 and Fig. 48, for example. Fig. 47 and Fig. 48 are a side view and a perspective view illustrating an example of the automobile including the structured body 20.

As illustrated in Fig. 47 and Fig. 48, the object 10 that is made up of the automobile may include the curved portion 15 situated on the upper face 13 at a rear portion of the object 10. In this case, the object 10 may include the structured body 20 situated at the curved portion 15 of the upper face 13 at the rear portion thereof. Accordingly, the fluid F can be suppressed from separating from the object 10 at the rear portion of the object 10. For example, as illustrated in Fig. 47, the separation point 18 at which separation of the fluid F from the object 10 occurs can be made to be situated farther downstream.

When the fluid F separates from the object 10, the dead water region 19 may be formed between the fluid F and the object 10. When the dead water region 19 is formed, the pressure resistance that the object 10 receives from the fluid F increases. According to the example illustrated in Fig. 47 and Fig. 48, the separation point 18 can be shifted downstream as compared to a case in which the object 10 does not include the structured body 20, and accordingly the dead water region 19 can be suppressed from being formed. Thus, the pressure resistance that the object 10 receives from the fluid F can be reduced.

### (Tenth Modification)

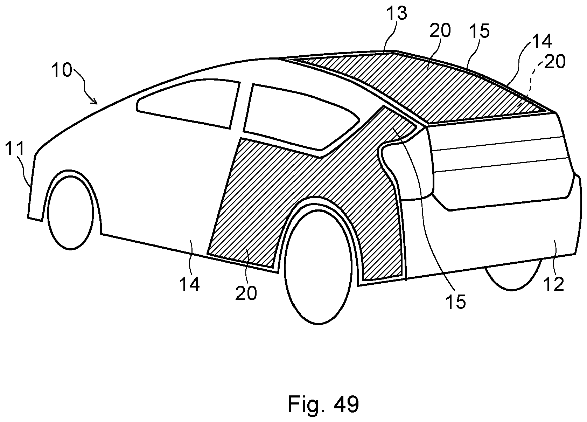

Fig. 49 is a perspective view illustrating the object 10 according to a tenth modification. The object 10 that is made up of an automobile may include curved portions 15 situated on the side faces 14 at the rear portions thereof. The curved portions 15 may be formed at part of the side faces 14 adjacent to the upper face 13, for example. In this case, the object 10 may include structured bodies 20 situated at the curved portions 15 of the side faces 14 at the rear portions thereof.

The object 10 that is made up of the automobile may include structured bodies 20 situated at each of the curved portions 15 of the two side faces 14 at the rear portions thereof. The object 10 that is made up of the automobile may further include a structured body 20 situated at the curved portion 15 of the upper face 13 at the rear portion thereof. In this case, the object 10 that is made up of the automobile will have three structured bodies 20.

### (Eleventh Modification)

The structured bodies 20 situated at the curved portions 15 may have features of the structured body 20 described in the above-described first embodiment or modifications thereof. In other words, the structured body 20 described in the above-described first embodiment or modifications thereof may be attached to the curved portions 15. Alternatively, the structured body 20 described in the above-described first embodiment or modifications thereof may be components making up the curved portions 15 of the object 10.

For example, the structured bodies 20 situated at the curved portions 15 may include a plurality of the above-described first guide structures 31 described in the first embodiment or modifications thereof. For example, the disturbance structures 30 of the structured bodies 20 situated at the curved portions 15 may include a plurality of the first guide structures 31 described in the first embodiment or modifications thereof described above, and a plurality of the second guide structures 32 described above.

### (Other Modifications)

In the above embodiment, an example has been given in which the object 10 including the structured body 20 is a moving body that can move by itself. However, the object 10 is not limited in particular, as long as the object 10 is in contact with the fluid F. For example, the object 10 may be a fixed object that does not move by itself, but controls the flow of the fluid F.

The moving body may be, for example, an automobile such as a passenger car, a truck, a bus, or the like, a railway vehicle such as a train, a high-speed rail train, a locomotive, or the like, an aircraft such as an airplane, a helicopter, a drone, or the like, or a bicycle or the like. These moving bodies move through the atmosphere. The fluid that the moving body comes into contact with is air. The object 10 including the structured body 20 may be part of these moving bodies. For example, the object 10 may be a component that makes up the moving body, such as a body or the like.

The fixed object may be, for example, piping such as a duct, a gas line, or the like, a vane of a windmill, a vent, louvers, or the like, of air-conditioning equipment such as an air conditioner, or the like. These fixed objects control the flow of gasses. The object 10 that includes the structured body 20 may be part of these fixed objects. For example, the object 10 may be a component that makes up a surface of these fixed objects.

### EXAMPLES

Next, embodiments of the present disclosure will be described in further detail by way of Examples, but the embodiments of the present disclosure are not limited to the description of the following Examples, insofar as the gist thereof is not departed from.

### (EXAMPLE B1)

Effects of the structured body 20 were verified by wind tunnel experiments, in which an airflow is made to collide with the object 10 to which the structured body 20 is attached. A one-tenth scale model of a 10-ton truck was used for the object 10. The object 10 includes a curved portion 15 situated between the front face 11 and the upper face 13. The curvature radius of the curved portion 15 is 25 mm. Part of the airflow flows rearward along the upper face 13 after colliding with the front face 11. Part of the airflow flows along the curved portion 15 while part of the airflow reaches the upper face 13 from the front face 11.

The configuration of the structured body 20 attached to the curved portion 15 situated between the front face 11 and the upper face 13 is as follows. The frictional portion 25 and the smooth portion 26 extend along the curved portion 15 from the front face 11 toward the upper face 13.
- Length S1 of frictional portion 25: 210 mm
- Length of smooth portion 26: 210 mm
- Width S21 of frictional portion 25: 7 mm
- Width S22 of smooth portion 26: 7 mm
- Height H1 of protrusions 301 of frictional portion 25: 0.08 mm
- Dimension W of protrusions 301 of frictional portion 25: 0.08 mm
- Gap G between two protrusions 301: 0.56 mm

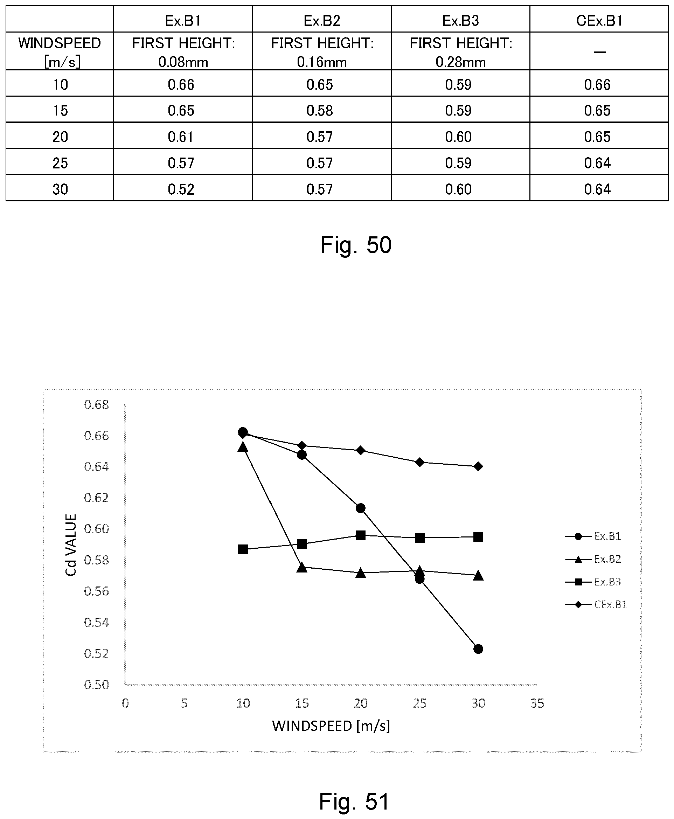

The drag coefficient in cases of setting the windspeed of the airflow to 10 m/s, 15 m/s, 20 m/s, 25 m/s, and 30 m/s was measured. The drag coefficient is also referred to as Cd value. The drag coefficient was calculated on the basis of drag generated at the object 10 due to the airflow. The drag was measured using a load cell via a wire fixed to the object 10. The results are shown in Fig. 50 and Fig. 51.

### (EXAMPLE B2)

The drag coefficient was measured in the same way as with the case of Example B1, except for changing the height H1, dimension W, and gap G, of the protrusions 301, as follows. The results are shown in Fig. 50 and Fig. 51.
- Height H1 of protrusions 301 of frictional portion 25: 0.16 mm
- Dimension W of protrusions 301 of frictional portion 25: 0.16 mm
- Gap G between two protrusions 301: 1.12 mm

### (EXAMPLE B3)

The drag coefficient was measured in the same way as with the case of Example B1, except for changing the height H1, dimension W, and gap G, of the protrusions 301, as follows. The results are shown in Fig. 50 and Fig. 51.
- Height H1 of protrusions 301 of frictional portion 25: 0.28 mm
- Dimension W of protrusions 301 of frictional portion 25: 0.28 mm
- Gap G between two protrusions 301: 1.96 mm

### (COMPARATIVE EXAMPLE B1)

The drag coefficient was measured in the same way as with the case of Example B1, except for not attaching the structured body 20 to the curved portion 15 of the object 10. The results are shown in Fig. 50 and Fig. 51.

It can be seen from the comparison of Examples B1 to B3 and Comparative Example B1 that attaching the structured body 20 to the object 10 enabled the drag coefficient to be reduced.

A tendency was observed in which the smaller the height H1 of the protrusions 301 was, the more markedly the effects were exhibited under high windspeeds.

### (EXAMPLE B11)

Effects of the structured body 20 were verified by wind tunnel experiments, in which an airflow is made to collide with the object 10 to which the structured body 20 is attached. A one-tenth scale model of a 10-ton truck was used for the object 10. Specifically, the object 10 has a length of 1250 mm, a width of 260 mm, and a height of 387 mm. The object 10 includes one curved portion 15 situated between the front face 11 and the upper face 13, and two curved portions situated between the front face 11 and the two side faces 14. The curvature radius of the curved portions 15 is 25 mm. The structured body 20 was attached to each of the three curved portions 15.

The configuration of the structured bodies 20 attached to the curved portions 15 is as follows.
- Length S1 of frictional portion 25: 210 mm
- Width S21 of frictional portion 25: 7 mm
- Width S22 of smooth portion 26: 7 mm
- Form of disturbance structures 30 of frictional portion 25: protrusions extending in direction orthogonal to planar first direction E1
- Height H1 of protrusions 301: 0.02 mm
- Dimension W of protrusions 301: 0.02 mm
- Gap G between two protrusions 301: 0.14 mm

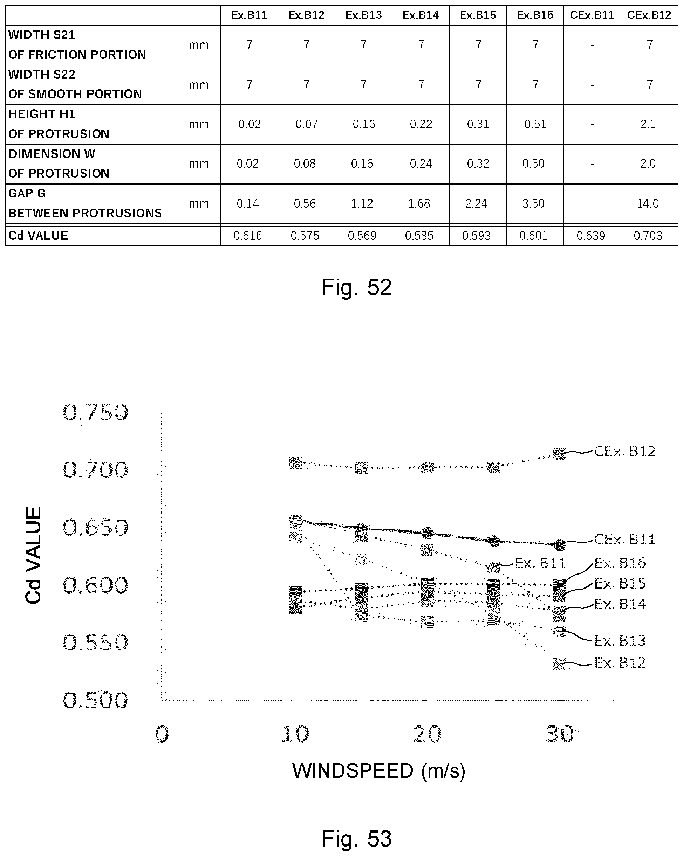

The drag coefficient in cases of setting the windspeed of the airflow to 10 m/s, 15 m/s, 20 m/s, 25 m/s, and 30 m/s was measured. The results are shown in Fig. 52 and Fig. 53. The "Cd value" shown in Fig. 52 is the Cd value in a case in which the windspeed is 25 m/s.

### (EXAMPLES B12 TO B16 AND COMPARATIVE EXAMPLE B12)

The drag coefficient was measured in the same way as with the case of Example B11, except for changing the height H1, dimension W, and gap G of the protrusions 301 as shown in Fig. 52. The results are shown in Fig. 52 and Fig. 53.

### (COMPARATIVE EXAMPLE B11)

The drag coefficient was measured in the same way as with the case of Example B11, except for not attaching the structured body 20 to the curved portions 15 of the object 10. The results are shown in Fig. 52 and Fig. 53.

It can be seen from the comparison of Examples B11 to B16 and Comparative Example B11 that attaching the structured body 20, including the protrusions 301 having a height H1 of 1.0 mm or less, to the object 10 enabled the drag coefficient to be reduced. On the other hand, as can be seen from the comparison of Comparative Example B12 and Comparative Example B11, the drag coefficient increased in a case of attaching the structured body 20 including protrusions 301 having a height H1 of 2.0 mm or more to the object 10. It is thought that the excessively great height H1 of the protrusions 301 caused the frictional resistance to exceed the pressure resistance, and the resistance that the object 10 received from the fluid increased.

### (EXAMPLES B21 TO B23)

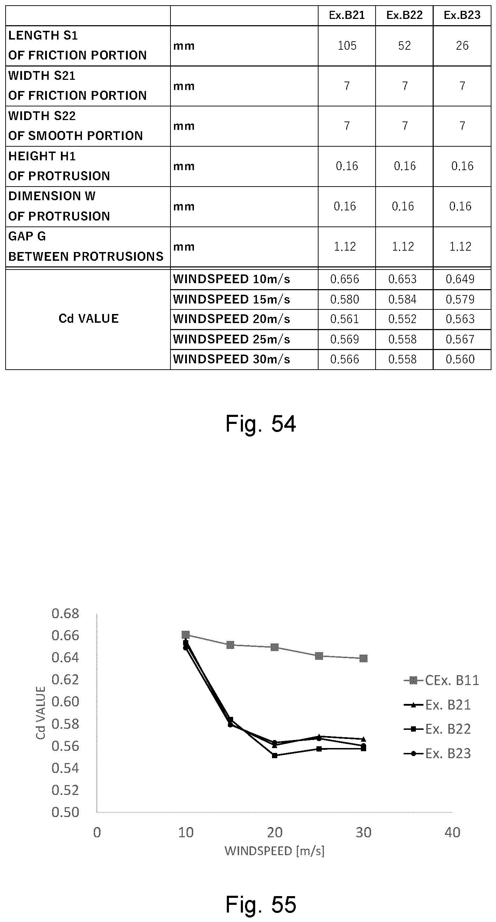

The drag coefficient was measured in the same way as with the case of Example B13, except for changing the length S1 of the frictional portion 25 as shown in Fig. 54. Results are shown in Fig. 54 and Fig. 55.

It can be seen from the comparison of Examples B21 to B23 and Comparative Example B11 that resistance that the object 10 receives from the fluid could be reduced by the structured body 20 in a case in which the length S1 of the frictional portion 25 is 25 mm or more. Dependency of the drag coefficient on the length S1 was hardly observed at all.

### (EXAMPLE B31)

Wind tunnel experiments were carried out using a model of an automobile illustrated in Fig. 49 as the object 10. The object 10 includes one curved portion 15 situated between the rear face 12 and the upper face 13, and two curved portions situated between the rear face 12 and the two side faces 14. Structured bodies 20 are attached to each of the three curved portions 15.

The configuration of the structured body 20 attached to the curved portions 15 is as follows.
- Length of structured body 20: 840 mm
- Width S21 of frictional portion 25: 20 mm
- Width S22 of smooth portion 26: 20 mm
- Form of disturbance structures 30 of frictional portion 25: protrusions extending in direction orthogonal to planar first direction E1
- Height H1 of protrusions 301: 0.10 mm
- Dimension W of protrusions 301: 0.10 mm
- Gap G between two protrusions 301: 0.70 mm

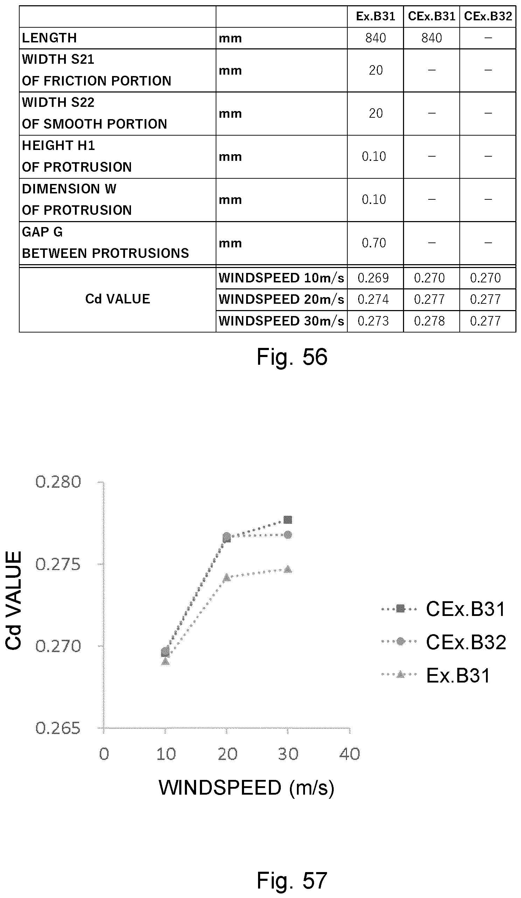

The drag coefficient in cases of setting the windspeed of the airflow to 10 m/s, 20 m/s, and 30 m/s was measured. The results are shown in Fig. 56 and Fig. 57.

### (COMPARATIVE EXAMPLE B31)

The drag coefficient was measured in the same way as with the case of Example B31, except for using structured bodies 20 that are made up of just the smooth portions 26. The results are shown in Fig. 56 and Fig. 57.

### (COMPARATIVE EXAMPLE B32)

The drag coefficient was measured in the same way as with the case of Example B31, except for not attaching the structured body 20 to the curved portions 15 of the object 10. The results are shown in Fig. 56 and Fig. 57.

It can be seen from the comparison of Example B31 and Comparative Examples B31 and B32 that attaching the structured body 20 including the frictional portion 25 and the smooth portion 26 to the object 10 made up of the automobile enabled the drag coefficient to be reduced.

### (EXAMPLES B41 TO B50)

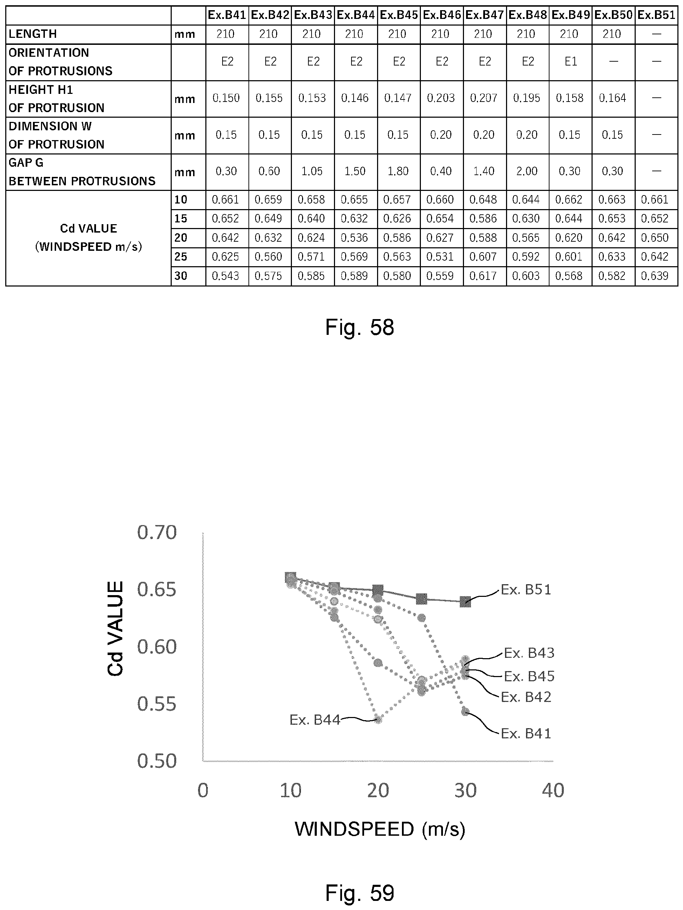

The drag coefficient was measured in the same way as with the case of Example B11, except for using a structured body 20 that includes the frictional portion 25 but does not include the smooth portion 26. The results are shown in Fig. 58. In the line "orientation of protrusions" in Fig. 58, "E2" means that the protrusions were extending in the planar second direction E2 that is orthogonal to the planar first direction E1, as illustrated in Figs. 40A,40B. In the line "orientation of protrusions" in Fig. 58, "E1" means that the protrusions 301 were extending in the planar first direction E1, as illustrated in Fig. 43. In the line "orientation of protrusions" in Fig. 58, "-" means that the frictional portion 25 included a plurality of protrusions 301 arrayed in the planar second direction E2, as illustrated in Fig. 42.

### (EXAMPLE B51)

The drag coefficient was measured in the same way as with the case of Example B41, except for not attaching the structured body 20 to the curved portions 15 of the object 10. The results are shown in Fig. 58.

Measurement results of the drag coefficient in Examples B41 to B45 and Example B51 are shown in Fig. 59. In Examples B41 to B45, the height H1 of the protrusions is approximately 0.15 mm. As shown in Examples B41 to B45, a tendency was observed in which the value of the drag coefficient indicated a local minimal value at a particular windspeed. The windspeed at which the local minimal value appeared was dependent on the gap G between the protrusions 301.

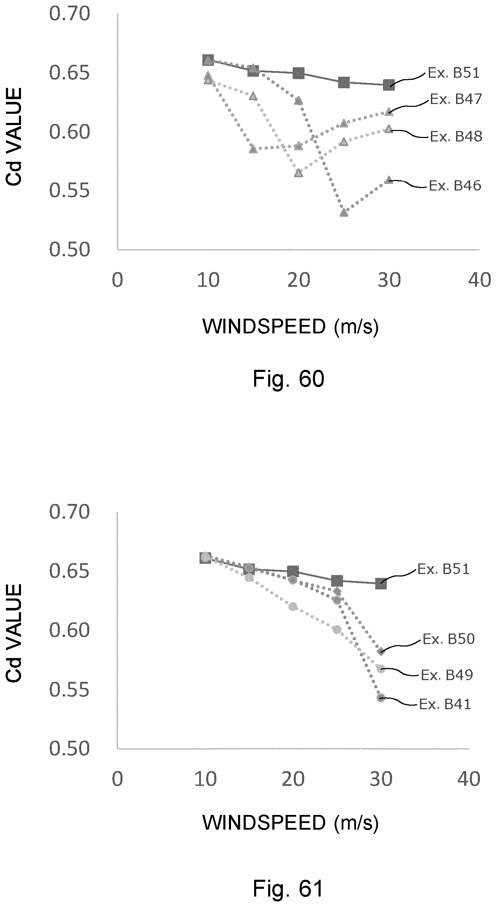

Measurement results of the drag coefficient in Examples B46 to B48 and Example B51 are shown in Fig. 60. In Examples B46 to B48, the height H1 of the protrusions is approximately 0.20 mm. As shown in Examples B46 to B48, a tendency was observed in which the value of the drag coefficient indicated a local minimal value at a particular windspeed. The windspeed at which the local minimal value appeared was dependent on the gap G between the protrusions 301.

Measurement results of the drag coefficient in Example B41 and Example B49 to Example B51 are shown in Fig. 61. In Example B49, the protrusions 301 extend in the planar first direction E1, as illustrated in Fig. 43. The structured body 20 of Example B49 enabled reduction in the drag coefficient as well. In Example B50, the plurality of protrusions 301 are arrayed in the planar second direction E2, as illustrated in Fig. 42. The structured body 20 of Example B50 enabled reduction in the drag coefficient as well.

### (EXAMPLE B61)

"IJ180 mc-114", manufactured by the 3M Company, was prepared. The IJ180 mc-114 includes a transparent base material made of polyvinyl chloride resin. The IJ180 mc-114 functions as the second base material 45.

Laminating film "DOL 1460Z" manufactured by Avery Dennison Corporation was prepared. The DOL 1460Z includes a polyvinyl chloride resin film, an adhesive layer, and release paper, in this order. The polyvinyl chloride resin film of the DOL 1460Z functions as the first base material 41.

After peeling the release paper of the DOL 1460Z away, the DOL 1460Z was laminated on the IJ180 mc-114. Next, ink was discharged onto the polyvinyl chloride resin film of the DOL 1460Z using a UV inkjet device. For the ink, "SEIKABEAM HT509", manufactured by Dainichiseika Color & Chemicals Mfg. Co., Ltd., was used. The ink discharged onto the polyvinyl chloride resin film was cured by UV irradiation. Thus, the plurality of disturbance structures 30 illustrated in Fig. 32C were formed. The disturbance structures 30 extend in parallel to the MD direction. The specific configuration of the structured body 20 including the plurality of disturbance structures 30 is as follows.
- Width S21 of frictional portion 25: 7 mm
- Width S22 of smooth portion 26: 7 mm
- First height H1 of disturbance structures 30: 0.14 mm
- Pitch P11 of the disturbance structures 30 in the planar first direction E1: 1.12 mm

The tensile modulus of elasticity of the structured body 20 was measured using a universal testing system "Instron 5565". The tensile modulus of elasticity of the structured body 20 in the MD direction was 39.8 MPa. The tensile modulus of elasticity of the structured body 20 in the TD direction was 20.3 MPa.

### (EXAMPLE B62)

The DOL 1460Z was laminated on the IJ 180 mc-114 in the same way as with Example B61. Next, the polyvinyl chloride resin film of the DOL 1460Z was coated over with a UV-curing resin composition. For the UV-curing resin, "SEIKABEAM HT509", manufactured by Dainichiseika Color & Chemicals Mfg. Co., Ltd., was used. A die was then pressed against a film of the UV-curing resin composition, thereby shaping the film of the UV-curing resin composition. The film of the UV-curing resin composition that was shaped was cured by UV irradiation. Thus, the plurality of disturbance structures 30 illustrated in Fig. 32C were formed. The configuration of the disturbance structures 30 is the same as in the case of Example B61.

The tensile modulus of elasticity of the structured body 20 was measured using the universal testing system "Instron 5565". The tensile modulus of elasticity of the structured body 20 in the MD direction was 29.8 MPa. The tensile modulus of elasticity of the structured body 20 in the TD direction was 21.1 MPa.

### (EXAMPLE B63)

The DOL 1460Z was laminated on the IJ180 mc-114 in the same way as with Example B61.

The tensile modulus of elasticity of the laminate made up of the IJ180 mc-114 and the DOL 1460Z was measured using the universal testing system "Instron 5565". The tensile modulus of elasticity of the laminate in the MD direction was 10.7 MPa. The tensile modulus of elasticity of the laminate in the TD direction was 10.4 MPa.

### Reference Signs List

10 object
11 front face
12 rear face
13 upper face
14 side face
15 curved portion
161 front window
162 rear window
18 separation point
19 dead water region
20 structured body
21 first face
21B base face
21B1 valley region
P1 first region
22 second face
25 frictional portion
26 smooth portion
26A first smooth portion
26B second smooth portion
27 boundary line
30 disturbance structure
301 protrusion
302 recess
31 first guide structure
311 first end portion
φ1 first inclination angle
312 third end portion
313 first upstream face
314 first downstream face
32 second guide structure
321 second end portion
φ2 second inclination angle
322 fourth end portion
323 second upstream face
324 second downstream face
33 connecting portion
34s small projection
35 flow-rectifying structure
40 base body
41 first base material
42 adhesive layer
43 separator
44 printed layer
45 second base material
46 adhesive layer
E1 planar first direction
E2 planar second direction
F fluid

## Claims

1. A structured body for reducing resistance of a fluid, the structured body comprising:
a first face that comes into contact with the fluid;
a frictional portion that is situated on the first face and that spreads in a planar first direction along the first face; and
a first smooth portion that is situated on the first face and that is adjacent to the frictional portion in a planar second direction that intersects the planar first direction, wherein
the frictional portion includes a plurality of first guide structures that are arrayed in the planar first direction and that guide the fluid to the first smooth portion,
the first guide structures each include a first end portion that extends toward the first smooth portion, and
the first end portion has a first inclination angle that is greater than 0° and smaller than 90° with respect to the planar first direction.

2. The structured body according to claim 1, further comprising:
a second smooth portion that is situated on the first face and that is adjacent to the frictional portion in the planar second direction, wherein
the frictional portion is situated between the first smooth portion and the second smooth portion in the planar second direction,
the frictional portion includes a plurality of second guide structures that are arrayed in the planar first direction and that guide the fluid to the second smooth portion,
the second guide structures each include a second end portion that extends toward the second smooth portion, and
the second end portion has a second inclination angle that is greater than 0° and smaller than 90° with respect to the planar first direction.

3. The structured body according to claim 2, wherein the frictional portion includes connecting portions that connect the first guide structures and the second guide structures.

4. The structured body according to any one of claims 1 to 3, wherein the frictional portion has a length in the planar first direction of 5 mm or more and 1000 mm or less.

5. The structured body according to any one of claims 1 to 3, wherein the frictional portion has a width in a direction orthogonal to the planar first direction of 0.2 mm or more and 50 mm or less.

6. The structured body according to any one of claims 1 to 3, wherein
the first face includes a base face, and
the first guide structures protrude with respect to the base face, in a thickness direction of the structured body.

7. The structured body according to claim 6, wherein
the first guide structures have a first height from the base face, and
the first height is 20 µm or more and 1.0 mm or less.

8. The structured body according to claim 7, wherein a ratio of a gap of the plurality of first guide structures in a direction orthogonal to a direction in which the first guide structures extend, with respect to the first height, is 1.0 or more and 12.0 or less.

9. The structured body according to any one of claims 1 to 3, wherein
the first face includes a base face, and
the first guide structures are recessed with respect to the base face, in a thickness direction of the structured body.

10. The structured body according to claim 6, wherein
the frictional portion includes the base face at a first base proportion, and
the first smooth portion includes the base face at a second base proportion that is higher than the first base proportion.

11. The structured body according to any one of claims 1 to 3, wherein the first inclination angle is 15° or more and 75° or less.

12. The structured body according to any one of claims 1 to 3, wherein the first guide structures linearly extend toward the first smooth portion.

13. The structured body according to claim 12, wherein
the first guide structures each have a deviance distance of 0.1 mm or less,
the deviance distance is a greatest value of distance in the planar first direction between a first imaginary straight line and the first guide structure, and
the first imaginary straight line is a straight line that passes through an upstream-most portion of the first guide structure in the planar first direction and a downstream-most portion of the first guide structure in the planar first direction.

14. The structured body according to any one of claims 1 to 3, wherein
the first face includes a curved face, and
the frictional portion and the first smooth portion are situated at the curved face.

15. The structured body according to claim 14, wherein a boundary line between the frictional portion and the first smooth portion extends in parallel to the planar first direction.

16. An object that comes into contact with a fluid, the object comprising:
the structured body according to any one of claims 1 to 3 that is situated on a surface of the object.

17. The object according to claim 16, further comprising:
a curved portion, wherein
the structured body is situated at the curved portion.

18. An object that comes into contact with a fluid, the object comprising:
a component that is made up of the structured body according to any one of claims 1 to 3.

19. The object according to claim 16, wherein the object is a moving body or part of a moving body.

20. The object according to claim 18, wherein the object is a moving body or part of a moving body.

21. The object according to claim 16, wherein the object controls flow of the fluid.

22. The object according to claim 18, wherein the object controls flow of the fluid.
